# EUROPÄISCHE PATENTSCHRIFT

(11) **EP 2 234 904 B1**
(45) Veröffentlichungstag und Bekanntmachung des Hinweises auf die Patenterteilung: **03.08.2011**
(21) Anmeldenummer: 08864901.7
(22) Anmeldetag: 19.12.2008
(51) Int. Cl.: B65G 1/04

(54) **VERFAHREN ZUM EINLAGERN VON LADEHILFSMITTELN UND TRANSPORTVORRICHTUNG**
METHOD FOR STORING LOADING AIDS AND TRANSPORTING DEVICE
PROCÉDÉ D'EMMAGASINAGE DE MOYENS DE CHARGEMENT, ET DISPOSITIF DE TRANSPORT

(30) Priorität: 21.12.2007 AT 21022007
(43) Veröffentlichungstag der Anmeldung: 06.10.2010
(73) Patentinhaber: TGW Mechanics GmbH, 4600 Wels (AT)
(72) Erfinder: WOLKERSTORFER, Christoph, A-4600 Wels (AT)
(74) Vertreter: Ofner, Clemens
(86) Internationale Anmeldenummer: PCT/AT2008/000467
(87) Internationale Veröffentlichungsnummer: WO 2009/079678

(56) Entgegenhaltungen:
- EP-A- 0 733 563
- EP-A- 1 764 317
- WO-A-99/30596
- DE-A1- 3 300 441
- DE-U1- 9 407 646
- US-A1- 2003 185 656

## Beschreibung

Die Erfindung betrifft ein Verfahren zum Einlagern von Ladehilfsmitteln mit einer Transportvorrichtung in ein Regalfach und eine Transportvorrichtung zur Durchführung des Verfahrens.

Aus der EP 1 746 317 A1 ist ein Verfahren zum Einlagern und Auslagern von Ladehilfsmitteln in ein- bzw. aus einem Regalfach mit an einer teleskopierbaren Transportvorrichtung in ihren Enden heb- und senkbar angeordneten Anschlagvorrichtungen bekannt. Im Regalfach können in Tiefenrichtung hintereinander mehrere Ladehilfsmittel auf Abstellplätzen abgelegt werden. Beim Einlagern wird ein erstes Ladehilfsmittel von einer in die abgesenkte Mitnahmeposition verstellten, ersten Anschlagvorrichtung in das Regalfach auf den in Einlagerrichtung vorderen Abstellplatz befördert, wonach ein weiteres Ladehilfsmittel von einer in die abgesenkte Mitnahmeposition verstellten, ersten Anschlagvorrichtung in das Regalfach auf den vorderen Abstellplatz bewegt und dabei das erste Ladehilfsmittel vom vorderen Abstellplatz auf einen in Einlagerrichtung dahinterliegenden Abstellplatz bewegt wird. Die Ladehilfsmittel sind im Regalfach dicht aneinanderliegend abgestellt. Beim Auslagern wird die teleskopierbare Transportvorrichtung mit ihrem Ende bis hinter eine Rückwand des am hinteren Abstellplatz abgestellten Ladehilfsmittel verstellt, die zweite Anschlagvorrichtung aus einer angehobenen Ausgangsposition in die abgesenkte Mitnahmeposition verstellt und danach die Ladehilfsmittel von der zweiten Anschlagvorrichtung in Auslagerrichtung bewegt.

Gemäß der DE 94 07 646 U1 wird ein Ladehilfsmittel von einer, auf einem zwischen Durchlaufregalen in einer Gasse verfahrbaren Stellwagen angeordneten Fördervorrichtung an ein Regal abgegeben.

Aus der WO 99/30596 A ist ein Verfahren zum Einlagern von Ladehilfsmitteln in ein Regal mit in übereinander angeordneten Lagerebenen ausgebildeten Fördervorrichtungen mit hintereinander angeordneten Abstellplätzen bekannt, bei dem ein erstes Ladehilfsmittel auf dem vorderen Abstellplatz abgestellt und durch die Fördervorrichtung vom vorderen Abstellplatz zu einem in Einlagerrichtung dahinter liegenden Abstellplatz gefördert wird, ehe ein weiteres Ladehilfsmittel auf den vorderen Abstellplatz abgestellt werden kann. Somit werden die Ladehilfsmittel über die Fördervorrichtung mit gegenseitigem Abstand in Richtung der Regaltiefe getaktet bewegt. Auch beim Auslagern werden die Ladehilfsmittel mit gegenseitigem Abstand in Auslagerrichtung nacheinander zum vorderen Abstellplatz bewegt und von diesem entfernt.

Aus der DE 33 00 441 A1 ist ein Verfahren zum Einlagern von Ladehilfsmitteln in ein Regal bekannt, in welchem in mehreren Reihen nebeneinander und in mehreren Lagerebenen übereinander endlose Förderketten paarweise angeordnet sind, auf welchen über eine Förderebene der Ketten vorstehende Nocken angeordnet sind. Die Ladehilfsmittel werden nacheinander von einer vertikal zwischen den Lagerebenen verstellbaren Hubgabel durch einen auf dieser angeordneten und mittels eines Zylinders in Einlagerrichtung verstellbaren Einschubstempel auf einen in Einlagerrichtung vorderen Abstellplatz bewegt. Dabei läuft das einzulagernde Ladehilfsmittel auf die Nocken der Förderketten auf und wird durch die Vorschubbewegung des einzulagernden Ladehilfsmittels ein zuvor auf dem vorderen Abstellplatz bewegtes Ladehilfsmittel über die Ketten auf einen in Einlagerrichtung hinteren Abstellplatz gefördert.

Die EP 0 647 575 B1 offenbart eine Transportvorrichtung zum Ein- und Auslagern von Ladehilfsmitteln in ein bzw. aus einem Regalfach, die zumindest einen Teleskoparm bestehend aus einem Tragrahmen und einem daran verschiebbar gelagerten Schlitten umfasst. Der Schlitten ist an den Enden mit zwischen einer Ausgangsstellung und einer Betätigungsstellung verschwenkbaren Anschlagvorrichtungen versehen, die zumindest soweit voneinander beabstandet sind, dass zwischen diesen ein Ladehilfsmittel aufgenommen werden kann. Soll ein Ladehilfsmittel in das Regallager eingelagert werden, so wird zumindest die an dem, dem Regalsystem gegenüberliegenden Ende gelagerte Anschlagvorrichtung hinter die Seitenwand des Ladehilfsmittels verschwenkt und das Ladehilfsmittel auf ein Regalfach abgeschoben. Beim Auslagern wird der Teleskoparm in das Regalfach ausgefahren und danach die an dem, dem Regallager zugewandten Ende gelagerten Anschlagvorrichtung hinter die Seitenwand des Ladehilfsmittels verschwenkt und vom Regalfach abgeschoben. Die Lastaufnahmevorrichtung ist nur dazu geeignet, ein Regallager mit einfach-tiefer Regalreihe zu bedienen.

Bei den aus der US 7,128,521 B2, EP 0 733 563 A1 und EP 1 772 400 A1 bekannten Transportvorrichtungen werden zwei hintereinander angeordnete Ladehilfsmittel von an Teleskoparmen schwenkbar gelagerten Anschlagvorrichtungen einzeln hintergriffen und in das Regallager eingelagert oder aus dem Regallager ausgelagert.
Aus der EP 0 775 665 B1 ist eine Transportvorrichtung in Form eines Teleskoptisches bekannt, bei dem der äußere Teleskopschlitten bis oberhalb eines ein- oder auszulagernden Ladehilfsmittels verfährt und Anschlagpaare jeweils hinter das jeweilige Ende des Ladehilfsmittels gegenläufig verschwenkt werden.

Die in der DE 203 03 376 U1 beschriebene Transportvorrichtung zum Ein- und Auslagern von Ladehilfsmitteln, umfasst eine Greifvorrichtung, welche an die Seitenwände des ein- und auszulagernden Ladehilfsmittel kraftschlüssig oder beispielsweise auch mittels Saugkraft an das Ladehilfsmittel angelegt wird. Dadurch kann vermieden werden, dass die Greifvorrichtung beim Auslagern eines Ladehilfsmittels bis an die Rückwand des Regalfaches ausfahren muss, um die hintere Seitenwand des Ladehilfsmittels formschlüssig zu umgreifen.

Die aus der DE 44 22 240 A1 bekannte Lastaufnahmevorrichtung umfasst parallel angeordnete Teleskoparme mit jeweils einem in horizontaler Richtung nach beiden Seiten ausziehbaren Schlitten, die mit Anschlagvorrichtungen versehen sind. Die Teleskoparme sind in Richtung einer Regalgasse (X-Richtung) aufeinander zu und voneinander weg bewegbar. Auf der Plattform zwischen den Teleskoparmen ist ein Endlosförderer angeordnet. Zum Einlagern einer Palette, wird diese vorerst mittels des Endlosförderers soweit verschoben, dass die Anschlagvorrichtungen durch die Zustellbewegung der Teleskoparme in X-Richtung in die Palette formschlüssig eingreifen können. Durch Ausfahren der Schlitten bei gleichzeitigem Antrieb des Endlosförderers wird die Palette an einen gassennahen oder gassenfernen Abstellplatz in einem Regalfach verschoben. Das Ergreifen der Palette erfolgt seitlich entweder an den vorderen oder mittleren Klötzen der Palette. Beim Auslagern einer Palette aus dem Regalfach werden vorerst die Anschlagvorrichtungen in X-Richtung verstellt und dabei die Klötze der Palette von den Anschlagvorrichtungen formschlüssig hintergriffen und durch Einziehen der Schlitten die Palette auf die Fördereinheit geschoben.

Aufgabe der Erfindung ist es ein Verfahren und eine Transportvorrichtung zum Ein- und/oder Auslagern von Ladehilfsmitteln in Regalsysteme mit mehreren hintereinander liegenden Abstellplätzen zu schaffen, mit dem bzw. der sich die Umschlagleistung (Anzahl der Ein- und/ oder Auslagervorgänge) innerhalb eines Lagersystems erhöhen lässt.

Die Aufgabe der Erfindung wird durch die Maßnahmen im Anspruch 1 gelöst. Von Vorteil ist, dass die Zustellbewegung der Transportvorrichtung zum Einlagern von Ladehilfsmitteln in ein Regalfach besonders kurz ist und unabhängig von der Abstellposition eines Ladehilfsmittels im Regalfach das einzulagernde Ladehilfsmittel stets an den vordersten Abstellplatz befördert wird und die Transportvorrichtung nur knapp bis hinter eine Vorderkante des Regalfaches ausfahren muss, sodass die Übergabezeit von Ladehilfsmitteln von einer Plattform in ein Regalfach reduziert wird. Zudem kann die Transportvorrichtung gegenüber solchen aus dem Stand der Technik bekannten in Einlagerrichtung besonders schmal ausgebildet und damit in entsprechender Weise auch die Regalgasse optimiert werden. Je schmaler die Regalgasse ausgebildet werden kann, umso mehr nutzbare Regalfläche steht zur Verfügung.

Von Vorteil ist auch die Maßnahme nach Anspruch 2, wonach ohne zusätzliche konstruktive Vorkehrungen treffen zu müssen, über das einzulagernde Ladehilfsmittel die in vorangegangene Einlagerungszyklen im Regalfach an den Abstellplätzen abgelegten Ladehilfsmittel in dahinter liegende Tiefenpositionen bewegt werden.

Gemäß der Maßnahme nach Anspruch 3 wird das einzulagernde Ladehilfsmittel in eine definierte Bereitstellungslage verbracht und anschließend auf den vorderen Abstellplatz in exakter Ausrichtung gefördert.

Eine vorteilhafte Maßnahme ist auch im Anspruch 4 beschrieben, da ein zuverlässiger Eingriff und Formschluss zwischen der Mitnahmeöffnung am Ladehilfsmittel und dem Mitnahmeorgan sichergestellt wird.

Von Vorteil sind auch die Maßnahmen nach den Ansprüchen 6 bis 8, wodurch auch die Übergabezeit der Ladehilfsmittel vom Regalfach auf die Plattform bzw. Transportvorrichtung erheblich reduziert werden kann und sich auch die Konstruktion der Transportvorrichtung wesentlich vereinfacht. So ist es nun möglich, dass nur ein einzelnes Ladehilfsmittel oder eine Gruppe von Ladehilfsmitteln ausgelagert werden, je nachdem wie es ein Kommissionierauftrag erfordert. Die Vorschubkraft wird dabei in Auslagerrichtung vom hintersten Ladehilfsmittel auf das jeweils davor liegende Ladehilfsmittel übertragen.

Die Aufgabe der Erfindung wird aber auch durch die Merkmale im Anspruch 9 gelöst. Von Vorteil ist, dass sich mittels der unterschiedlichen Stellwege der Anschlagvorrichtung und des Mitnahmeorgans die Funktionalität der Transportvorrichtung einerseits zum Einlagern von Ladehilfsmitteln in ein Regalfach und andererseits zum Auslagern von Ladehilfsmitteln aus einem Regalfach erweitern lässt. Auch ist von Vorteil, wenn der Stellweg des Mitnahmeorgans kleiner ist als der Stellweg der Anschlagvorrichtung, da die Bewegungsabläufe beim Einlagern und damit die Verstellung des Mitnahmeorgans relativ zum Ladehilfsmittel häufiger wiederkehren als die Bewegungsabläufe der Anschlagvorrichtung, die erforderlich sind, wenn die Ladehilfsmittel aus dem Regalfach ausgelagert werden müssen. Die kürzeren Bewegungen erlauben wiederum eine höhere Anzahl von Einlagervorgängen und tragen zu einem besonders wirtschaftlichen Lagersystem bei.

Nach einer vorteilhaften Ausführung gemäß Anspruch 10 können bei verhältnismäßig schmalen Regalgassen mehrere in Einlagerrichtung hintereinander vorgesehene Abstellplätze problemlos bedient werden.

Die Weiterbildung nach Anspruch 11 ist von Vorteil, da ein besonders kompakter Aufbau der Ausfahreinheit vorgeschlagen wird und vom Mitnahmeorgan auch hohe Vorschubkräfte auf das Ladehilfsmittel übertragen werden können.

Schließlich ist auch die Ausgestaltung nach Anspruch 12 vorteilhaft, da zumindest einer der ohnehin für die Ein- und Auslagerung erforderlichen Teleskoparme ebenso mit der Anschlagvorrichtung ausgestattet und nach Bedarf aktivierbar ist, um den Auslagervorgang von Ladehilfsmitteln vom Regalfach auf die Plattform vornehmen zu können.

Die Erfindung wird im nachfolgenden anhand der in den Zeichnungen dargestellten Ausführungsbeispiele näher erläutert.

Es zeigen:
- Fig. 1a-h: schematisch den Einlagervorgang von Ladehilfsmitteln von einer Plattform in ein Regalfach, in mehreren zeitlich aufeinander folgenden Verfahrensschritten;
- Fig. li-j: schematisch den Auslagervorgang von Ladehilfsmitteln vom Regalfach auf die Plattform;
- Fig. 2a: die erfindungsgemäße Transportvorrichtung mit einer in ihrer Öffnungsstellung befindlichen Ausfahreinheit, in Stirnansicht und vereinfachter Darstellung;
- Fig. 2b: die erfindungsgemäße Transportvorrichtung mit der in ihrer Schließstellung be- findlichen Ausfahreinheit, in Stirnansicht und vereinfachter Darstellung;
- Fig. 3: einen Teleskoparm der Ausfahreinheit in Stirnansicht, teilweise geschnitten und in vereinfachter Darstellung;
- Fig. 4: den Teleskoparm nach Fig. 3 in Seitenansicht und vereinfachter Darstellung;
- Fig. 5: eine weitere Ausführung der Transportvorrichtung in Draufsicht und stark verein- fachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf glei che Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

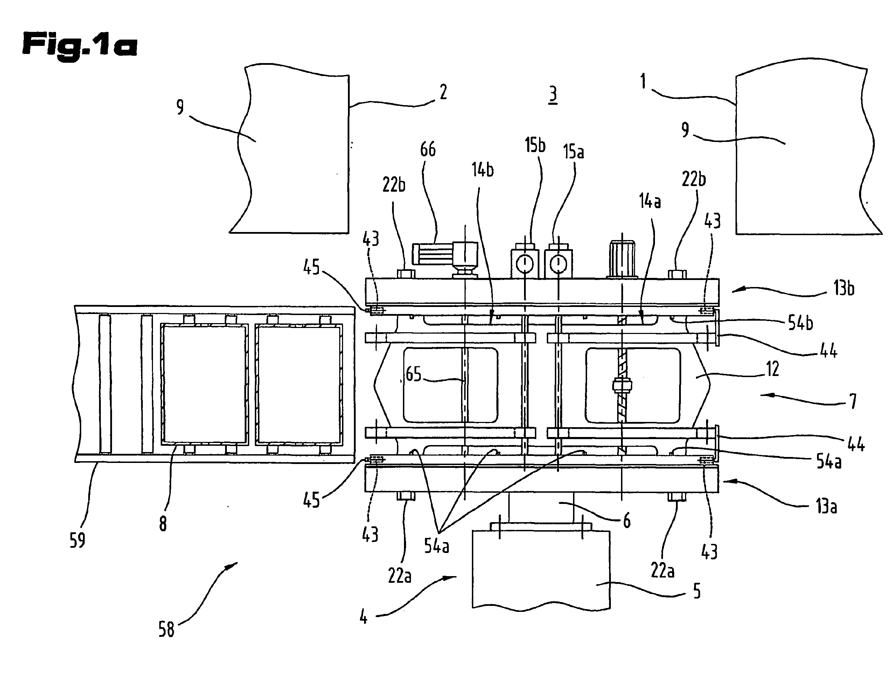

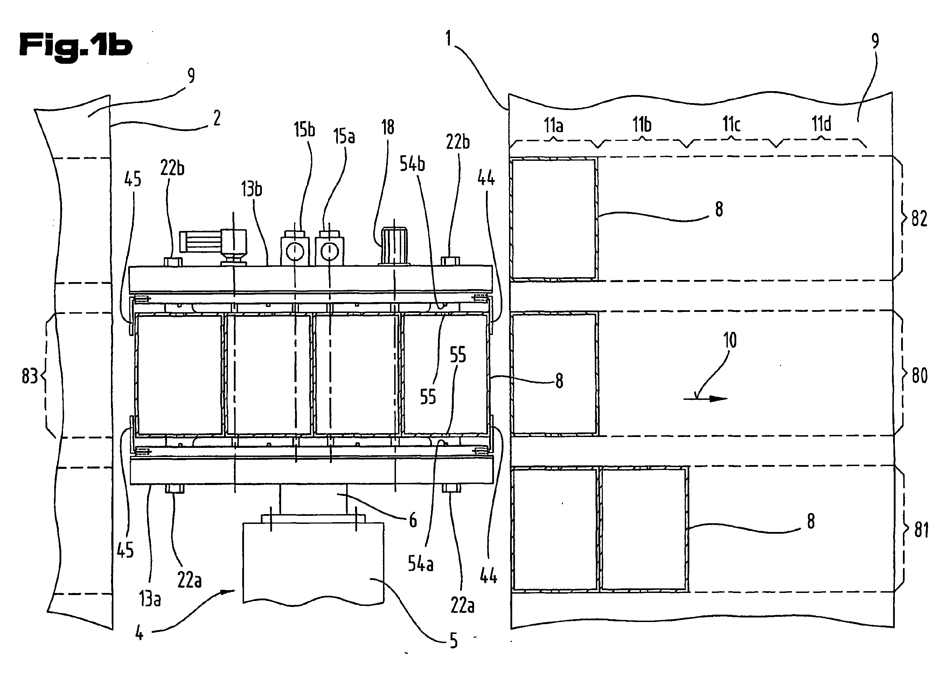

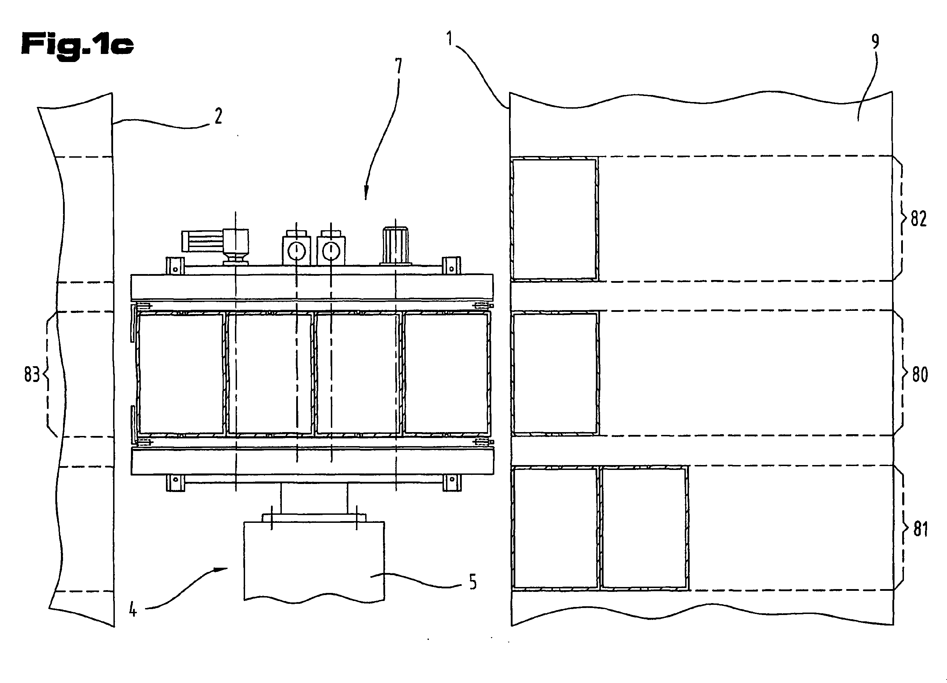

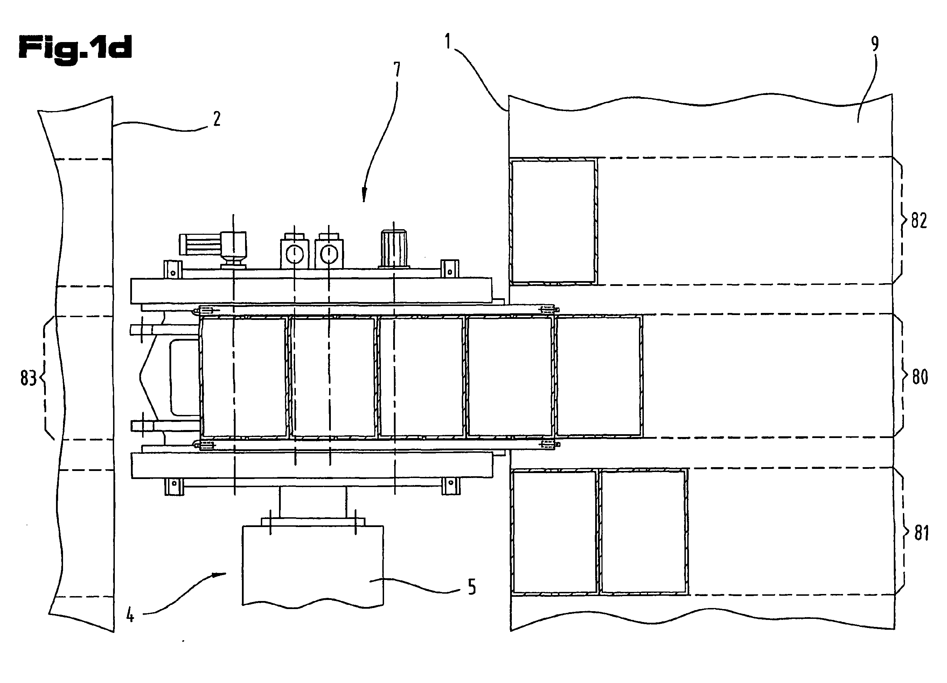

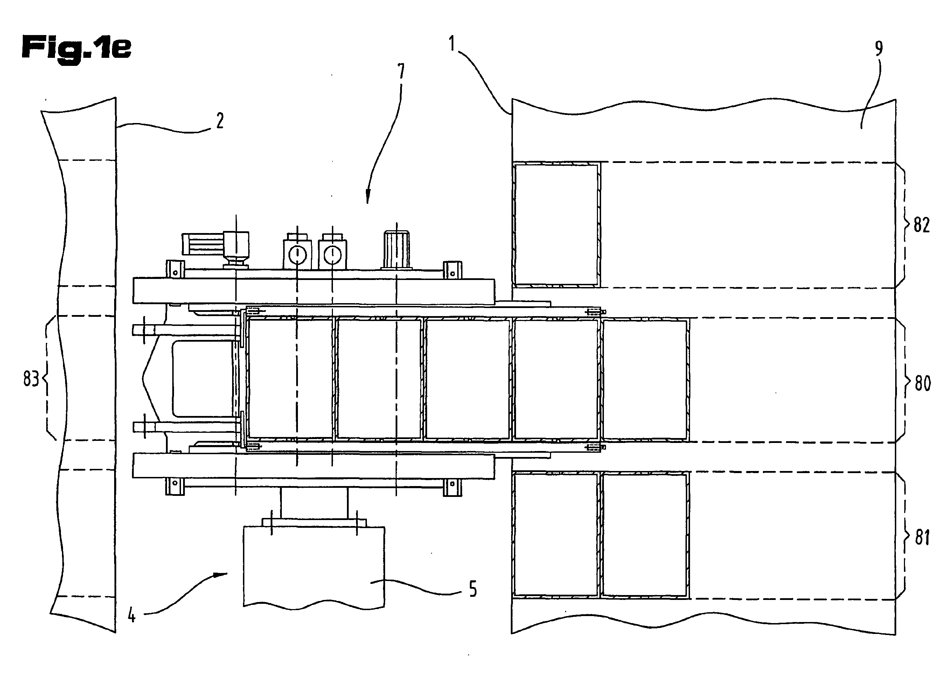

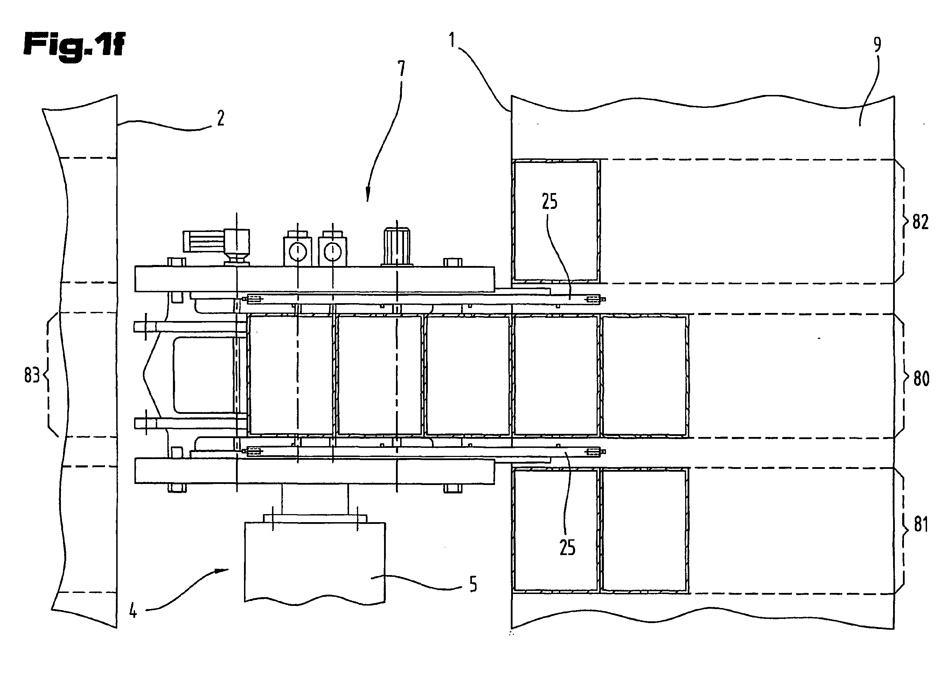

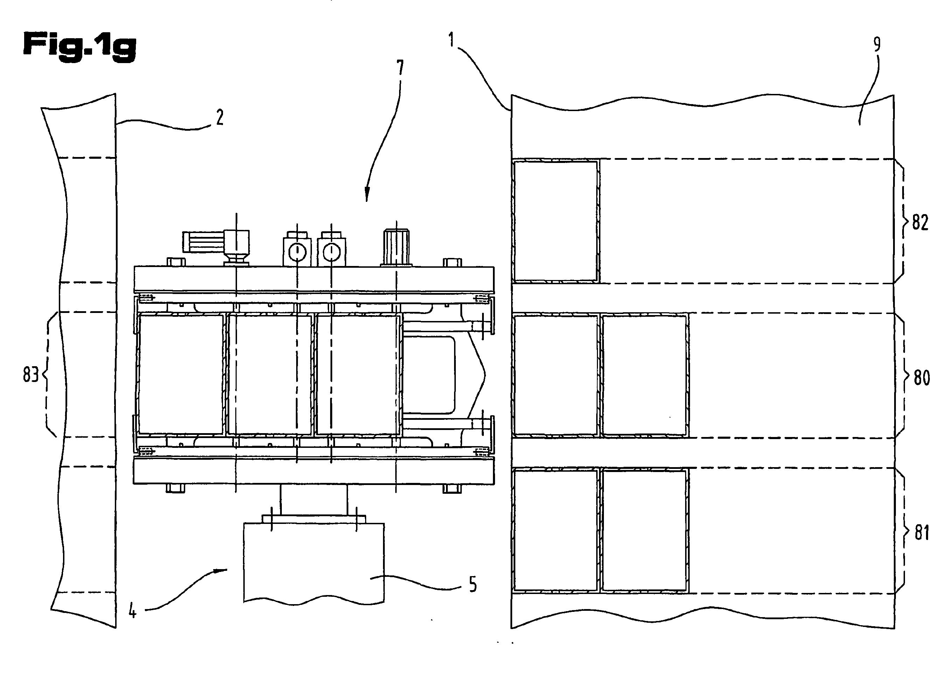

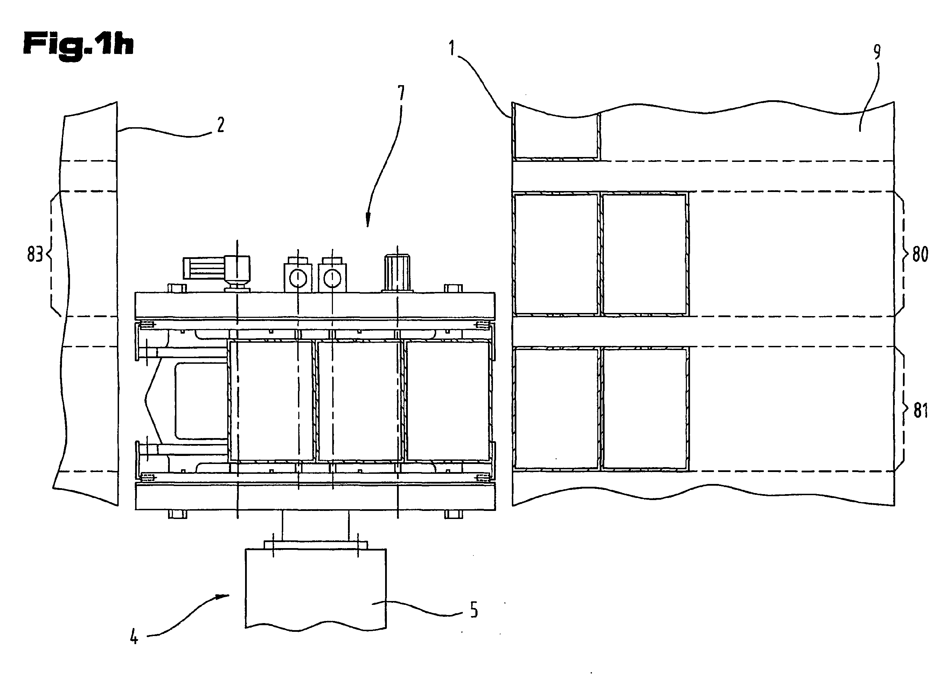

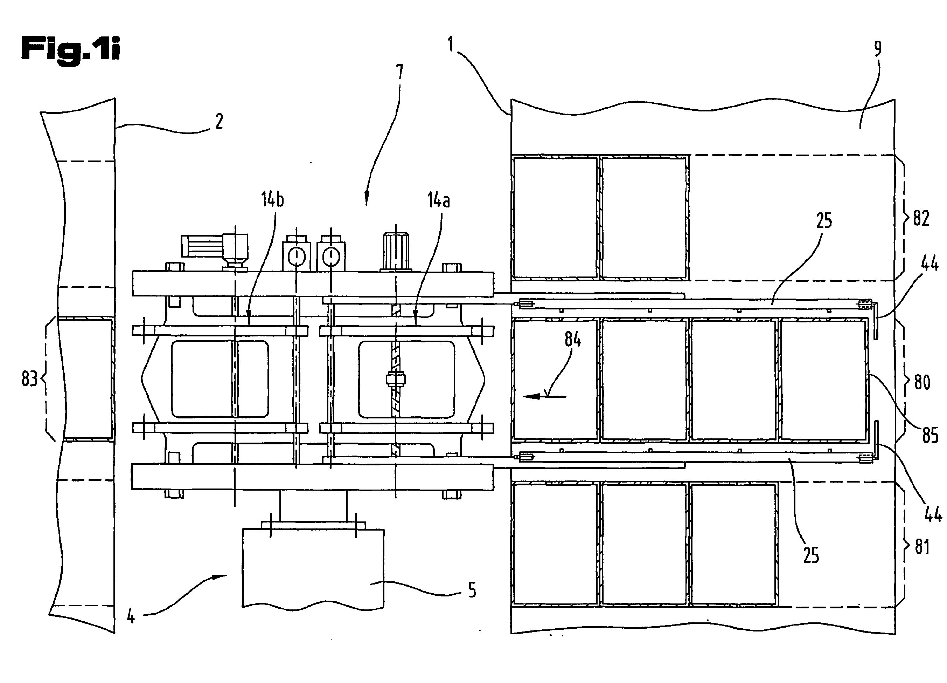

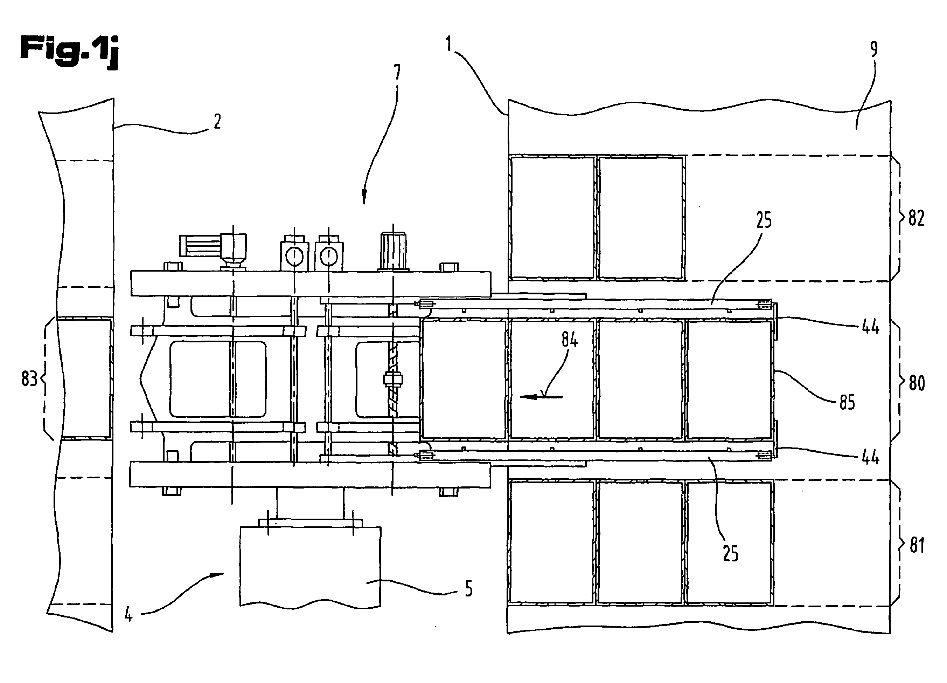

In den gemeinsam beschriebenen Figuren 1 bis 4 ist ein Lagersystem gezeigt, das spiegelbildlich mit Abstand gegenüberstehende Regalsysteme 1, 2 aufweist. Durch den Abstand zwischen den Regalsystemen 1, 2 ist im Lagersystem eine Gasse 3 freigehalten, in welcher eine Fördereinheit 4 angeordnet ist. Die Fördereinheit 4 ist beispielsweise durch ein auf Schienen entlang der Gasse 3 verfahrbares Regalbediengerät gebildet und umfasst einen an einer Fahreinheit (nicht dargestellt) befestigten, lotrechten Mast 5 und eine entlang diesem mittels eines Hubantriebes (nicht dargestellt) vertikal verstellbare Plattform 6 sowie eine auf dieser angeordnete Transportvorrichtung 7 zum Ein- und/oder Auslagern von Ladehilfsmitteln 8 in ein bzw. aus einem Regalfach 9 des Regalsystems 1, 2. Die Ladehilfsmittel 8, beispielsweise Tablare, Behälter aus Karton oder Kunststoff, sind normalerweise mit Nutzwaren gefüllt, können aber auch leer sein.

Jedes Regalsystem 1, 2 umfasst mehrere mit Abstand übereinander angeordnete Regalfächer 9 mit jeweils in Einlagerrichtung 10 in mehreren Reihen hintereinander angeordneten Abstellplätzen 11a bis 11d. Die Regalfächer 9 bilden jeweils eine horizontale ortsfeste Lagerfläche aus, wovon eine jede Lagerfläche mehrere hintereinander angeordnete Abstellplätze 11a bis 11d vorsieht. Nach gezeigter Ausführung sind die Regalsysteme 1, 2 dafür ausgebildet, dass in einem Regalfach 9 in Einlagerrichtung 10 hintereinander vier Ladehilfsmittel 8 mit den Abmessungen 300 mm x 400 mm oder zwei Ladehilfsmittel 8 mit den Abmessungen 600 mm x 400 mm abstellbar sind. Die Transportvorrichtung 7 kann entweder vier Ladehilfsmittel 8 mit den Abmessungen 300 mm x 400 mm im Quertransport oder zwei Ladehilfsmittel 8 mit den Abmessungen 600 mm x 400 mm im Längstransport hintereinander aufnehmen.

Die zwischen den Regalsystemen 1, 2 vor ein vom Rechnersystem festgelegten Regalfach 9 verstellbare Transportvorrichtung 7 umfasst eine Tragplatte 12, auf der eine parallel angeordnete Teleskoparme 13a, 13b aufweisende Ausfahreinheit und zwischen diesen in Einlagerrichtung 10 hintereinander angeordnete Fördervorrichtungen 14a, 14b gelagert sind. Die Förder vorrichtungen 14a, 14b sind mit unabhängig voneinander steuerbaren Antriebsmotoren 15a, 15b gekoppelt, die ihrerseits an das Rechnersystem angeschlossen sind. Vorzugsweise werden als Fördervorrichtungen 14a, 14b Zweispurförderer, insbesondere Gurtförderer eingesetzt. Andererseits können die Fördervorrichtungen 14a, 14b auch durch einen Rollenförderer, Bandförderer und dgl. gebildet werden.

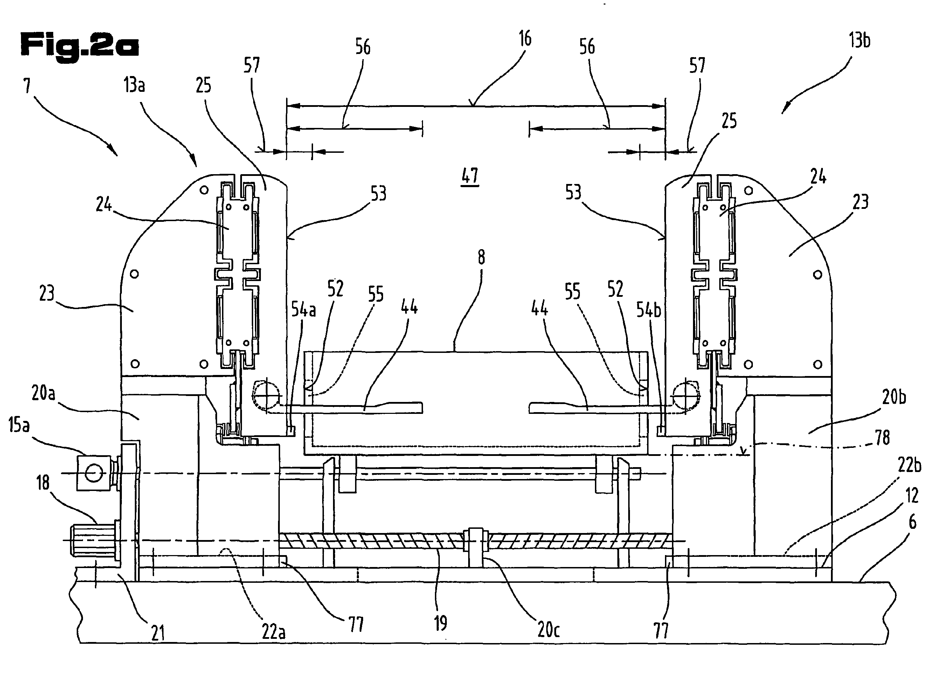

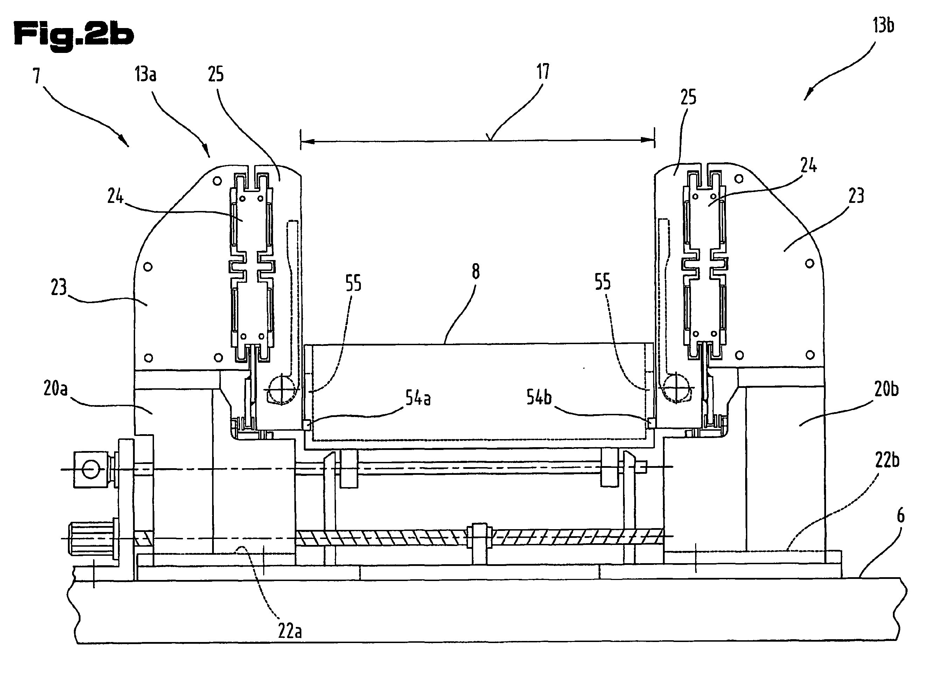

Die nach beiden Richtungen bezüglich der Plattform 6 in die Regalsysteme 1, 2 ausfahrbaren Teleskoparme 13a, 13b sind über einen ersten Stellantrieb zwischen einer in Fig. 2a gezeigten, auseinander bewegten Öffnungsstellung 16 und einer in Fig. 2b gezeigten, aufeinander zu bewegten Schließstellung 17 verstellbar auf der Tragplatte 12 gelagert. Der erste Stellantrieb weist einen Stellmotor 18, eine an diesem gekoppelte Spindel 19 mit gegenläufigen Gewindeabschnitten und Lagerelemente 20a bis 20c auf. Der Stellmotor 18 wie auch die Antriebsmotoren 15a, 15b sind über einen Befestigungswinkel 21 an der Plattform 6 befestigt. Die Lagerelemente 20a, 20b sind jeweils über Führungsanordnungen 22a, 22b mit der Tragplatte 12 verbunden. Durch Drehen der Spindel 19 werden die Lagerelemente 20a, 20b aufeinander zu bewegt oder voneinander wegbewegt und dabei die Teleskoparme 13a, 13b relativ zu einem Ladehilfsmittel 8 zwischen seiner Öffnungsstellung 16 und Schließstellung 17 quer zur Einlagerrichtung 10 verstellt.

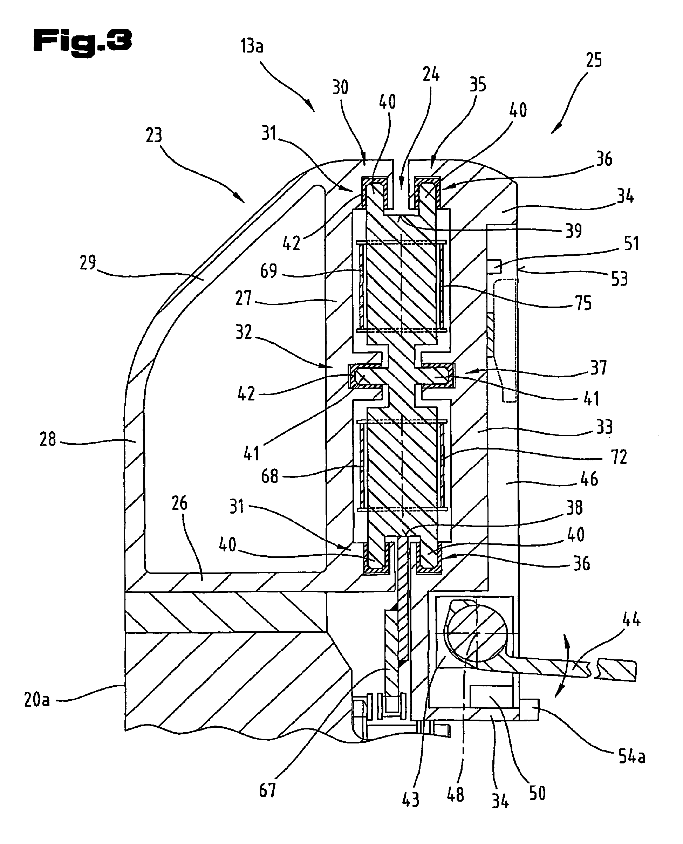

In Fig. 3 ist ein Querschnitt durch einen Teleskoparm 13a gezeigt. Dieser weist einen beispielsweise über eine nicht weiters dargestellte Schraubenverbindung am Lagerelement 20a befestigten Tragrahmen 23, einen gegenüber dem Tragrahmen 23 verschiebbaren Mittelschlitten 24 und einen gegenüber dem Mittelschlitten 24 verschiebbaren Oberschlitten 25.

Der Tragrahmen 23 ist beispielsweise durch ein Hohlprofil ausgebildet und weist eine zur Tragplatte 12 parallel verlaufende untere Seitenwand 26, eine aufragende erste und zweite Seitenwand 27, 28, sowie eine zwischen den aufragenden Seitenwänden 27, 28 winkelig verlaufende obere Seitenwand 29. Zwischen dem Mittelschlitten 24 und dem Tragrahmen 23 ist eine Führungsanordnung 30 vorgesehen, die nach gezeigtem Ausführungsbeispiel durch eine Gleitführung gebildet ist. Der Tragrahmen 23 ist dazu auf der dem Mittelschlitten 24 zugewandten, aufragenden ersten Seitenwand 27 im Bereich der Längsränder mit Seitenführungsbahnen 31 und zwischen diesen mit einer Höhenführungsbahn 32 versehen.

Der Oberschlitten 25 ist im Querschnitt etwa C-förmig ausgebildet und weist eine Basis 33 und an dieser auf der dem Mittelschlitten 24 abgewandten Seite vorspringende Schenkeln 34 auf. Zwischen dem Oberschlitten 25 und dem Mittelschlitten 24 ist eine Führungsanordnung 35 vorgesehen. Der Oberschlitten 25 ist dazu auf der dem Mittelschlitten 24 zugewandten, aufragenden Basis 33 im Bereich der Längsränder mit Seitenführungsbahnen 36 und zwischen diesen mit einer Höhenführungsbahn 37 versehen.

Der plattenartige Mittelschlitten 24 ist einerseits an seiner Unterseite 38 und Oberseite 39 jeweils mit in dessen Längserstreckung parallel verlaufenden und komplementär zu den Seitenführungsbahnen 31, 36 des Tragrahmens 23 und Oberschlittens 25 ausgebildeten rippenartigen Führungsstegen 40 und andererseits an seinen Seitenwänden zwischen der Unter- und Oberseite 38, 39 jeweils mit in dessen Längserstreckung verlaufenden und komplementär zu den Höhenführungsbahnen 32, 37 des Tragrahmens 23 und Oberschlittens 25 ausgebildeten rippenartigen Führungsstegen 41 versehen. Auf die Führungsstege 40, 41 des Mittelschlittens 24 sind Gleitleisten 42 aufgesteckt.

Natürlich kann anstatt der gezeigten Gleitführungen zwischen dem Tragrahmen 23 und Mittelschlitten 24 einerseits und Oberschlitten 25 und Mittelschlitten 24 andererseits jeweils eine Rollenführung und dgl. angeordnet werden.

Der Oberschlitten 25 jedes Teleskoparmes 13a, 13b ist an seinen gegenüberliegenden Enden jeweils mit über einen fluidisch oder elektrisch betätigten Stellmotor 43 zwischen einer in Fig. 2b dargestellten Ausgangsstellung und einer in Fig. 2a dargestellten Betätigungsstellung verstellbare Anschlagvorrichtungen 44, 45 ausgestattet. In der Ausgangsstellung ist die Anschlagvorrichtung 44, 45 in eine Ausnehmung 46 zwischen den Schenkeln 34 des Oberschlittens 25 verstellt, daher ist die Anschlagvorrichtung 44, 45 aus einem Bewegungsweg 47 der Ladehilfsmittel 8 zwischen der Fördereinheit 4 und dem Regalfach 9 herausbewegt. Hingegen ist in der Betätigungsstellung die Anschlagvorrichtung 44, 45 aus der Ausnehmung 46 heraus verstellt, daher ist die Anschlagvorrichtung 44, 45 in den Bewegungsweg 47 der Ladehilfsmittel 8 zwischen der Fördereinheit 4 und dem Regalfach 9 hineinbewegt und ragt über die Außenumgrenzung des Oberschlittens 25 vor.

Nach gezeigtem Ausführungsbeispiel sind die Anschlagvorrichtungen 44, 45 durch um zur Einlagerrichtung 10 parallele Achsen 48 zwischen der Ausgangs- und Betätigungsstellung schwenkbar am Oberschlitten 25 gelagerte Klappen gebildet.

Die Anschlagvorrichtungen 44, 45 der beiden Oberschlitten 25 sind einander gegenüberliegend angeordnet und jeweils in Richtung der gegenüberliegenden Anschlagvorrichtung 44, 45 synchron verstellbar.

Wie in Fig. 3 weiters eingetragen, wird die Ausgangs- und Betätigungsstellung der Anschlagvorrichtung 44, 45 von Sensoren 50, 51 überwacht.

Die Transportvorrichtung 7 bzw. Ausfahreinheit umfasst ferner eine Ausrichtvorrichtung für auf der Fördervorrichtung 14a, 14b bereitgestellte Ladehilfsmittel 8, welche nach diesem Ausführungsbeispiel durch die in eine Schließstellung 17 gegenläufig aufeinander zu bewegbaren Teleskoparme 13a, 13b gebildet ist und in eine Ausricht- bzw. Zentrierstellung relativ zueinander verstellbare und gegen die in Einlagerrichtung 10 parallelen Seitenwänden 52 anlegbare ebene Ausrichtflächen 53 aufweist. Vorzugsweise werden die einander gegenüberliegenden Ausrichtflächen 53 gegenläufig aufeinander in die Ausrichtstellung zubewegt, sodass ein Ladehilfsmittel 8 auf der Fördervorrichtung 14a, 14b mittig zwischen den Teleskoparmen 13a, 13b positioniert wird, bevor es in das Regalfach 9 abgeschoben wird. Andererseits könnte auch nur einer der Teleskoparme 13a, 13b in Richtung auf den gegenüberliegenden, ortsfesten Teleskoparm 13a, 13b verstellt werden.

Die Transportvorrichtung 7 bzw. Ausfahreinheit weist zusätzlich zwischen den Anschlagvorrichtungen 44, 45 zumindest ein noppenartiges Mitnahmeorgan 54 auf, das über einen Stellantrieb zwischen einer in Fig. 2a dargestellten Grundstellung und einer in Fig. 2b dargestellten Förderstellung relativ verstellbar an der Tragplatte 12 gelagert ist.

Wie in den Fig. ersichtlich, sind beide Teleskoparme 13a, 13b an ihren Oberschlitten 25 jeweils zwischen den endseitig daran gelagerten Anschlagvorrichtungen 44,45 mit mehreren in Einlagerrichtung 10 mit Abstand hintereinander angeordneten und an der Ausrichtfläche 53 senkrecht vorragenden Mitnahmeorganen 54a, 54b versehen, wobei die Mitnahmeorgane 54a, 54b der beiden Oberschlitten 25 einander gegenüberliegen und jeweils in Richtung des gegenüberliegenden Mitnahmeorgans 54a, 54b verstellbar sind. Der Abstand zwischen dem in Einlagerrichtung 10 vorderen Mitnahmeorgan 54a, 54b und der Anschlagvorrichtung 44, 45 beträgt bei Ladehilfsmittel 8 der Abmessung 300 mm x 400 mm zwischen 25 % und 75 %, insbesondere 50 % deren Länge in Einlagerrichtung 10 und bei Ladehilfsmittel 8 der Abmessung 600 mm x 400 mm zwischen 10 % und 50 %, insbesondere 25 % deren Länge in Einlagerrichtung 10.

Werden Ladehilfsmittel 8 mit den Abmessungen 300 mm x 400 mm eingelagert, greift in der Förderstellung zumindest ein Paar von noppenartigen Mitnahmeorganen 54a, 54b in Mitnahmeöffnungen 55 in den Seitenwänden 52 des Ladehilfsmittels 8 formschlüssig ein, wie in den Fig. 1c und 2b gezeigt. Die Mitnahmeöffnung 55 kann beispielsweise durch an der Seitenwand 52 vorgesehene Rippen begrenzt oder durch eine in der Seitenwand 52 vertieft angeordnete Nut, Bohrung und dgl. gebildet werden.

Werden Ladehilfsmittel 8 mit den Abmessungen 600 mm x 400 mm eingelagert, greifen in der Förderstellung zwei Paare von Mitnahmeorganen 54a, 54b in Mitnahmeöffnungen 55 in den Seitenwänden 52 des Ladehilfsmittels 8 formschlüssig ein (nicht gezeigt).

Der Verstellweg 56 der Anschlagvorrichtung 44, 45 ist größer als der Verstellweg 57 des Mitnahmeorgans 54a, 54b, wobei der Verstellweg 56 der Anschlagvorrichtung 44, 45 so festgelegt ist, dass die Anschlagvorrichtung 44, 45 in der Betätigungsstellung über die Seitenwand 52 hinweg bis vor und/oder hinter das Ladehilfsmittel 8 verstellt ist. Der Verstellweg 56 der Anschlagvorrichtung 44, 45 beträgt zwischen 50 mm und 200 mm und der Verstellweg 57 des Mitnahmeorgans 54a, 54b zwischen 5 mm und 30 mm.

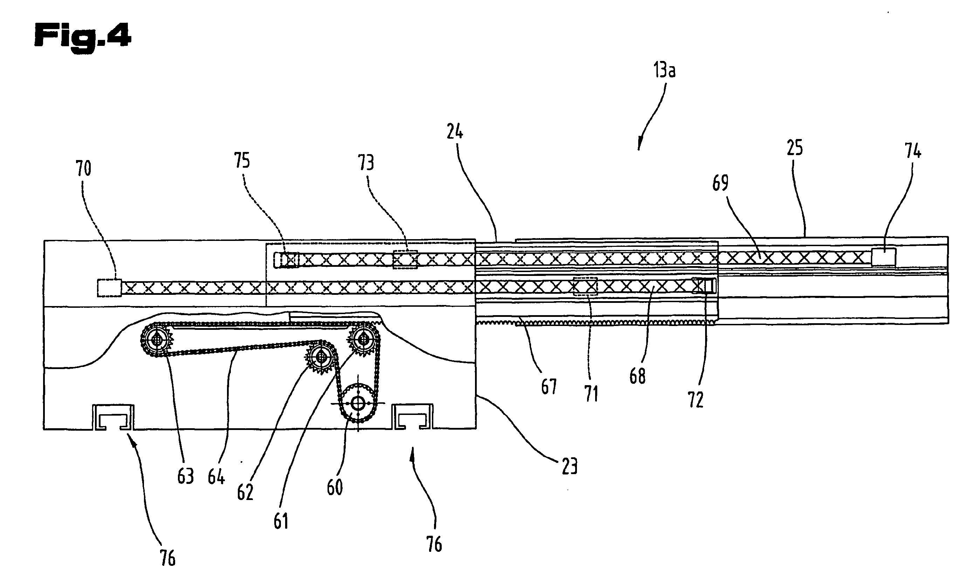

Die Teleskoparme 13a, 13b sind über einen zweiten Stellantrieb in Bezug auf die Plattform 6 nach beiden Richtungen teleskopartig ausziehbar, wie dies anhand der Fig. 3 und 4 erläutert wird.

An den Tragrahmen 23 der Teleskoparme 13a, 13b sind jeweils ein Zugmitteltrieb, angeordnet, der ein Antriebsrad 60, Umlenkräder 61, 62, ein Spannrad 63 sowie ein um diese geführtes endloses Zugmittel 64, beispielsweise eine Kette, umfasst. Die Antriebsräder 60 sind über eine Antriebswelle 65 (Fig. 1a) miteinander verbunden und an einen Antriebsmotor 66 gekuppelt.

An den Mittelschlitten 24 ist jeweils ein Mitnahmeorgan 67, beispielsweise eine Zahnstange, befestigt, welche in das obere Trum des Zugmittels 64 eingreift. Dadurch werden bei einem Drehen der Antriebsräder 60 die Mittelschlitten 24 über die Zugmittel 64 und Mitnahmeorgane 67 mit einer Antriebskraft beaufschlagt und bezüglich der Tragrahmen 23 synchron verschoben, d.h. aus- oder eingefahren.

Um gleichzeitig die Oberschlitten 25 bezüglich des Mittelschlittens 24 zu verschieben, sind die Oberschlitten 25 jeweils über zwei Zugmittel 68, 69, insbesondere Riemen, mit den Tragrahmen 23 verbunden.

Das erste Zugmittel 68 ist mit seinem ersten Enden mittels einer Klemme 70 am in Ausfahrrichtung des Teleskoparmes 13a, 13b gegenüberliegenden Endbereich des Tragrahmens 23 und mit seinem zweiten Enden mittels einer Klemme 71 am in Ausfahrrichtung des Teleskoparmes 13a, 13b gegenüberliegenden Endbereich des Oberschlittens 25 befestigt sowie um eine in Ausfahrrichtung des Teleskoparmes 13a, 13b im vorderen Endbereich des Mittelschlittens 24 gelagerte Rolle 72 umgelenkt.

Das zweite Zugmittel 69 ist mit seinem ersten Enden mittels einer Klemme 73 am in Ausfahrrichtung des Teleskoparmes 13a, 13b vorderen Endbereich des Tragrahmens 23 und mit seinem zweiten Enden mittels einer Klemme 74 am in Ausfahrrichtung des Teleskoparmes 13a, 13b vorderen Endbereich des Oberschlittens 25 befestigt sowie um eine in Ausfahrrichtung des Teleskoparmes 13a, 13b im gegenüberliegenden Endbereich des Mittelschlittens 24 gelagerte Rolle 75 umgelenkt.

Je nach Drehrichtung des Antriebsmotors 66 können nun die Teleskoparme 13a, 13b synchron ein- und ausgefahren werden, um Ladehilfsmittel 8 in ein Regalfach 9 des entweder auf der rechten Seite zur Gasse 3 aufgestellten Regalsystems 1 oder auf der linke Seite zur Gasse 3 aufgestellten Regalsystems 2 einzulagern oder aus einem Regalfach 9 des entweder auf der rechten Seite zur Gasse 3 aufgestellten Regalsystems 1 oder auf der linke Seite zur Gasse 3 aufgestellten Regalsystems 2 auszulagern.

Wie aus Fig. 4 ersichtlich ist der Tragrahmen 23 mit Führungselementen 76 versehen, die komplementär zu den am Tragrahmen 6 befestigten Führungselementen 77 (Fig. 2a, 2b) ausgebildet sind.

Im nachfolgenden wird anhand der Fig. 1a bis 1h das Verfahren zum Einlagern von Ladehilfsmitteln 8 mit der Transportvorrichtung 7 in ein Regalfach 9 der Regalsysteme 1, 2 beschrieben.

Der Logistikfluss wird von einem Rechnersystem zentral gesteuert, wozu Kommissionieraufträge elektronisch erfasst und nacheinander abgearbeitet werden. Ein Kommissionierauftrag kann einen oder mehrere Artikel umfassen. Sind mehrere Artikel erforderlich, werden diese einzeln oder als Artikelgruppe auf Ladehilfsmittel 8 gepackt. Die zu einem Kommissionierauftrag zugeordneten Ladehilfsmittel 8 können die gleichen oder unterschiedlichen Abmessungen, wie oben beschrieben, aufweisen und werden in vom Rechnersystem festgelegte auf tragsbezogene Lagerkanäle 80 bis 83 etc. der Regalfächer 9 eingelagert. In den Fig. sind die Lagerkanäle 80 bis 83 etc. durch strichlierte Begrenzungslinien angedeutet.

Bei der Abarbeitung der Kommissionieraufträge kann der Fall eintreten, dass auf der Transportvorrichtung 7 Ladehilfsmittel 8 geladen sind, die unterschiedlichen Kommissionieraufträgen zugeordnet sind. So kann es nun erforderlich sein, dass ein erstes Ladehilfsmittel 8 in den Lagerkanal 80, ein zweites Ladehilfsmittel 8 in den Lagerkanal 81, ein drittes Ladehilfsmittel 8 in den Lagerkanal 82 und ein viertes Ladehilfsmittel 8 in den Lagerkanal 83 eingelagert werden muss.

Im nachfolgenden wird der Einlagervorgang eines Ladehilfsmittels 8 in den Lagerkanal 80 beschrieben.

Noch bevor die Transportvorrichtung 7 in die vom Rechnersystem festgelegte Lagerposition vor den Lagerkanal 80 verfährt, werden in einer in Fig. 1a gezeigten Vorzone 58 des Lagersystems entsprechend den Kommissionieraufträgen von zumindest einer Fördervorrichtung 59 nacheinander Ladehilfsmittel 8 antransportiert und von der Transportvorrichtung 7 übernommen. Die Fördervorrichtung 59 ist beispielsweise durch einen Rollenförderer gebildet. Die Ladehilfsmittel 8 sind beispielsweise auf einer ihrer Seitenwände mit einem Datenträger, insbesondere einer Barcodeetikette, RFID-Etikette oder einem Transponder, versehen, der maschinenlesbare Daten beinhaltet, die noch vor der Übergabe der Ladehilfsmittel 8 auf die Transportvorrichtung 7 von einer Leseeinrichtung (nicht gezeigt) erfasst und dem Rechnersystem mitgeteilt werden.

Das Rechnersystem erfasst somit die Zuordnung der Ladehilfsmittel 8 zum jeweiligen Kommissionierauftrag und die Reihenfolge, in der die Ladehilfsmittel 8 auf die Transportvorrichtung 7 übergeben werden. Mit anderen Worten ist dem Rechnersystem stets bekannt, wo sich welches - einem Kommissionierauftrag zugeordneten - Ladehilfsmittel 8 auf der Transportvorrichtung 7 befindet.

Vor der Verlagerung der Ladehilfsmittel 8 - daher von zwei Ladehilfsmitteln 8 mit den Abmessungen 600 mm x 400 mm oder von vier Ladehilfsmitteln 8 mit den Abmessungen 300 mm x 400 mm - von der Fördervorrichtung 59 auf die Transportvorrichtung 7 muss sichergestellt werden, dass jenes der Fördervorrichtung 59 zugewandte Paar von Anschlagvorrichtungen 44, 45 in die Ausgangsstellung und die Teleskoparme 13a, 13b in ihre Öffnungsstellung 16 bewegt sind. Die Fördervorrichtung 59 der Vorzone 58 und die Fördervorrichtungen 14a, 14b der Transportvorrichtung 7 werden zur Verlagerungsbewegung der Ladehilfsmittel 8 auf die Transportvorrichtung 7 mit gleicher Fördergeschwindigkeit angetrieben. Das einer Übernahmeseite der Ladehilfsmittel 8 gegenüberliegende Paar von Anschlagvorrichtungen 44, 45 wird in die Betätigungsstellung, daher in den Bewegungsweg 47 der Ladehilfsmittel 8 verstellt, wie in Fig. 1 a gezeigt.

Die Ladehilfsmittel 8 werden sodann auf der Transportvorrichtung 7 mittels der Fördervorrichtungen 14a, 14b entlang dem Bewegungsweg 47 gefördert und das von der Transportvorrichtung 7 übernommene und in den Lagerkanal 80 einzulagernde erste Ladehilfsmittel 8 gegen die auf der Einlagerseite angeordneten Anschlagvorrichtungen 44 positioniert, während ein nachfolgendes Ladehilfsmittel 8 auf das erste Ladehilfsmittel 8 aufläuft. Sind vier Ladehilfsmittel 8 einzulagern, wird das erste Ladehilfsmittel 8 gegen die auf der Einlagerseite angeordneten Anschlagvornchtungen 44 positioniert und die nachfolgenden Ladehilfsmittel 8 hinter dem ersten Ladehilfsmittel 8 aufgestaut.

Sind nun die Ladehilfsmittel 8 auf der Transportvorrichtung 7 abgestellt, wird die Transportvorrichtung 7 mittels der Fördereinheit 4 aus der Vorzone 58 in die vom Rechnersystem festgelegte Lagerposition vor den Lagerkanal 80 verfahren. Ist die Lagerposition erreicht, ist die Transportvorrichtung 7 soweit verfahren, dass ihre von den Fördervorrichtungen 14a, 14b ausgebildete Förderebene 78 - wie in Fig. 2a eingetragen - und die horizontale Lagerfläche des Regalfaches 9 fluchten und die Transportvorrichtung 7 mittig zu den hintereinander liegenden Abstellplätzen 11a bis 11d des Lagerkanals 80 positioniert ist. Vorzugsweise werden während der Verstellbewegung der Transportvorrichtung 7 sowohl die Anschlagvorrichtungen 44 am rechten Ende der Oberschlitten 25 als auch die Anschlagvorrichtungen 45 am linken Ende des Oberschlittens 25 in ihre Betätigungsstellung verstellt, wie in Fig. 1b eingetragen. Dadurch wird eine unerwünschte Verlagerung der Ladehilfsmittel 8 auf der Transportvorrichtung 7 während der Fahrbewegung der Fahreinheit 4 begrenzt und Störungen im Lagersystem vermieden.

Die Ladehilfsmittel 8 werden auf der Transportvorrichtung 7 vor ihrer bevorstehenden Einlagerung in den Lagerkanal 80 des Regalfaches 9 gegen die in Einlagerrichtung 10 vorderen Anschlagvorrichtungen 44, die bereits in ihre in Fig. 1b dargestellte Betätigungsstellung bewegt wurden, positioniert, in dem die Fördervorrichtungen 14a, 14b auf die Ladehilfsmittel 8 eine Antriebskraft übertragen. Ist das in Einlagerrichtung 10 erste Ladehilfsmittel 8 gegen die Anschlagvorrichtungen 44 aufgelaufen, wird über einen nicht dargestellten Sensor, beispielsweise eine Lichtschranke, die Anwesenheit dieses Ladehilfsmittels 8 erfasst und die erste und/oder zweite Fördervorrichtung 14a, 14b vom Rechnersystem angesteuert und stillgesetzt.

Die Ladehilfsmittel 8 sind nun so auf der Transportvorrichtung 7 positioniert, dass die paarweise gegenüberliegenden Mitnahmeorgane 54a, 54b mittig zu den in den Seitenwänden 52 jedes Ladehilfsmittels 8 angeordneten Mitnahmeöffnungen 55 gegenüberliegen. Sodann werden die Teleskoparme 13a, 13b aus ihrer Öffnungsstellung 16 in ihre Schließstellung 17 sowie die Mitnahmeorgane 54a, 54b aus ihrer Grundstellung in ihre Förderstellung relativ zu den Ladehilfsmittel 8 bewegt und dabei die Ladehilfsmittel 8 formschlüssig ergriffen, wie in Fig. 1c gezeigt. Sind die Ladehilfsmittel 8 formschlüssig ergriffen, können die in Einlagerrichtung 10 vorderen Anschlagvorrichtungen 44 aus ihrer Betätigungsstellung in ihre Ausgangsstellung rückbewegt werden.

Darauf folgend werden die Teleskoparme 13a, 13b synchron ausgefahren und dabei die Ladehilfsmittel 8 in Richtung auf den Lagerkanal 80 bewegt, wie in Fig. 1d gezeigt. Der Lagerkanal 80 weist nach dieser Ausführung vier Abstellplätze 11 a bis 11 d auf. Gleichzeitig werden auch die Fördervorrichtungen 14a, 14b in Einlagerrichtung 10 angetrieben. Die Fördergeschwindigkeit der Fördervorrichtungen 14a, 14b entspricht der Ausfahrgeschwindigkeit der Teleskoparme 13a, 13b. Das erste Ladehilfsmittel 8, welches mit den Mitnahmeorganen 54a, 54b in Eingriff steht, wird alleinig durch die Ausfahrbewegung der Teleskoparme 13a, 13b bis auf den in Einlagerrichtung 10 ersten Abstellplatz 11a verschoben, wo bereits ein Ladehilfsmittel 8 zum selben Kommissionierauftrag abgestellt wurde. Das in einem vorangegangenen Einlagerzyklus am ersten Abstellplatz 11a abgestellte Ladehilfsmittel 8 wird durch das einzulagernde erste Ladehilfsmittel 8 an den dahinter liegenden zweiten Abstellplatz 11a abgeschoben, wie in Fig. 1e gezeigt.

Danach werden die Teleskoparme 13a, 13b aus ihrer Schließstellung 17 in die Öffnungsstellung 16 sowie die Mitnahmeorgane 54a, 54b aus ihrer Förderstellung in ihre Grundstellung relativ zu den Ladehilfsmittel 8 bewegt, sodass die Ladehilfsmittel 8 freigestellt sind und die Teleskoparme 13a, 13b wieder einfahren können, wie in Fig. 1f gezeigt.

Gleichzeitig mit dem Einfahren der Teleskoparme 13a, 13b werden die Fördervorrichtungen 14a, 14b entgegen der Einlagerrichtung 10 angetrieben. Die Fördergeschwindigkeit der Fördervorrichtungen 14a, 14b entspricht der Einfahrgeschwindigkeit der Teleskoparme 13a, 13b. Dabei werden die auf der Transportvorrichtung 7 verbleibenden drei Ladehilfsmittel 8 in Richtung auf die linken Anschlagvorrichtungen 45 bewegt und an diesen positioniert. Ist das in Einlagerrichtung 10 vierte Ladehilfsmittel 8 gegen die Anschlagvorrichtungen 45 aufgelaufen, wird über einen nicht dargestellten Sensor, beispielsweise eine Lichtschranke, die Anwesenheit dieses Ladehilfsmittels 8 erfasst und die erste und/oder zweite Fördervorrichtung 14a, 14b vom Rechnersystem angesteuert und stillgesetzt. Sodann werden die rechten Anschlagvorrichtungen 44 aus ihrer Ausgangsstellung in die Betätigungsstellung bewegt, wie in Fig. 1g gezeigt.

Die Einlagerzyklen wiederholen sich solange bis der Lagerkanal 80 alle zu einem Kommissionierauftrag erforderlichen Ladehilfsmittel 8 enthält.

In Fig. 1h ist noch ein Einlagerzyklus gezeigt, in dem das auf der Transportvorrichtung 7 abgestellte zweite Ladehilfsmittel 8 in den Lagerkanal 81 eingelagert werden soll.

Im Lagerkanal 81 sind bereits am ersten und zweiten Abstellplatz 11a, 11b Ladehilfsmittel 8 aus zumindest einem vorangegangenen Einlagerzyklus abgestellt. In diesem Einlagerzyklus wird das zweite Ladehilfsmittel 8 wiederum von der Transportvorrichtung 7 in oben beschriebener Weise auf den ersten Abstellplatz 11a abgeschoben und dabei die am ersten und zweiten Abstellplatz 11a, 11b abgestellten Ladehilfsmittel 8 auf die dahinter liegenden zweiten und dritten Abstellplätze 11b, 11c abgeschoben.

Die beschriebene Arbeitsweise wiederholt sich solange bis auch das dritte und vierte Ladehilfsmittel 8 in die entsprechenden Lagerkanäle 82, 83 eingelagert wurden und die Fördereinheit 4 wiederum in die Vorzone 58 für die Übernahme von Ladehilfsmitteln 8 zu weiteren Kommissionieraufträgen verfährt. Es sei hier auch noch erwähnt, dass es genauso gut möglich ist, in einem Einlagerzyklus mehrere Ladehilfsmittel 8 gleichzeitig als Gruppe von der Transportvorrichtung 7 in einen Lager-, kanal abzuschieben. Beispielsweise können das erste und zweite Ladehilfsmittel 8 in den Lagerkanal 80 auf den ersten und zweiten Abstellplatz 11a, 11b abgeschoben werden. Dabei wird das in einem vorangegangenen Einlagerzyklus am ersten Abstellplatz 11a abgestellte Ladehilfsmittel 8 auf den dritten Abstellplatz 11c abgeschoben.

Andererseits können in einem Lagerkanal auch Ladehilfsmittel 8 mit unterschiedlichen Abmessungen abgestellt werden. So kann auf dem ersten und zweiten Abstellplatz 11 a, 11b ein Ladehilfsmittel 8 mit den Abmessungen 600 mm x 400 mm und auf dem dritte und vierten Abstellplatz 11c, 11d Ladehilfsmittel 8 jeweils mit den Abmessungen 300 mm x 400 mm abgestellt werden.

Sind die zu einem Kommissionierauftrag erforderlichen Ladehilfsmittel 8 in einem Lagerkanal 80 zusammengestellt worden, können die Ladehilfsmittel 8 von der Transportvorrichtung 7 ausgelagert und beispielsweise zu einer Auslager-Fördertechnik (nicht dargestellt) oder Verladungsstation und dgl. gefördert werden.

Anhand der Fig. 1i und 1j wird das Verfahren zum Auslagern von Ladehilfsmitteln 8 mit der Transportvorrichtung 7 aus dem Regalfach 9 bzw. Lagerkanal 80 der Regalsysteme 1, 2 beschrieben. Hier können sich unterschiedliche Auslagersituationen ergeben.

Konnten zu einem Kommissionierauftrag nicht alle Ladehilfsmittel 8 in nur einem Lagerkanal 80 bis 83 ungebracht werden, wird das zu diesem Kommissionierauftrag zugehörige, nicht untergebrachte Ladehilfsmittel 8 in einem anderen Lagerkanal 80 abgestellt.

Soll nun dieses eine im Lagerkanal 80 abgestellte Ladehilfsmittel 8 ausgelagert werden, wird vorerst die Transportvorrichtung 7 mittels der Fördereinheit 4 in die vom Rechnersystem festgelegte Lagerposition vor den Lagerkanal 80 verfahren. Ist die Lagerposition erreicht, ist die Transportvorrichtung 7 soweit verfahren, dass ihre Förderebene 78 und eine Lagerfläche des Regalfaches 9 fluchten und die Transportvorrichtung 7 mittig zu den hintereinander abgestellten Ladehilfsmittel 8 positioniert ist.

Die Teleskoparme 13a, 13b werden in die Öffnungsstellung 16 bewegt und vollständig ausgefahren. Danach werden die in Auslagerrichtung 84 hinteren Anschlagvorrichtungen 44 aus ihrer Ausgangsstellung in die in den Fig. gezeigte Betätigungsstellung bewegt, in welcher sich die Anschlagvorrichtungen 44 hinter der Rückwand 85 des am hintersten Abstellplatz 11d eingelagerten Ladehilfsmittels 8 befinden.

Sodann werden die Teleskoparme 13a, 13b synchron eingefahren und die dicht aneinander liegenden Ladehilfsmittel 8 nur soweit in Richtung auf die Transportvorrichtung 7 der Fördereinheit 4 bewegt, dass die in Auslagerrichtung 84 vordere Fördervorrichtung 14a das vorderste Ladehilfsmittel 8 ergreifen und auf diese verlagern bzw. die Förderebene 78 der Transportvorrichtung 7 das vorderste Ladehilfsmittel 8 übernehmen kann, wie in Fig. 1j dargestellt. Die Ladehilfsmittel 8 werden während der Auslagerungsbewegung von der Transportvorrichtung 7; 90, insbesondere der(n) Anschlagvorrichtung(en) 44; 96; 97 mit einer Vorschubkraft beaufschlagt und auf der horizontalen Lagerfläche in Richtung auf die Fördereinheit 4 bewegt. Gleichzeitig wird auch die Fördervorrichtung 14a in Auslagerrichtung 84 angetrieben. Die Fördergeschwindigkeit der Fördervorrichtungen 14a entspricht der Einfahrgeschwindigkeit der Teleskoparme 13a, 13b. Dieses Ladehilfsmittel 8 wird über die Fördervorrichtung 14a und gegebenenfalls die Fördervorrichtung 14b auf der Plattform 6 in oben beschriebener Weise positioniert.

Die im Lagerkanal 80 verbleibenden Ladehilfsmittel 8 sind dabei nur soweit bewegt worden, dass die Ladehilfsmittel 8 am entsprechenden Abstellplatz 11a bis 11c stehen bzw. eine Vorderkante des Regalfaches 9 und die vordere Seitenwand des Ladehilfsmittels 8 im Wesentlichen fluchten.

Konnten zu einem Kommissionierauftrag noch zwei weitere Ladehilfsmittel 8 nicht in nur einem Lagerkanal 80 bis 83 ungebracht werden, werden diese in einem anderen Lagerkanal 80 abgestellt.

Beim Auslagern werden die Teleskoparme 13a, 13b nur teilweise eingefahren und die Ladehilfsmittel 8 nur soweit in Richtung auf die Transportvorrichtung 7 der Fördereinheit 4 bewegt, dass die in Auslagerrichtung 84 beiden vorderen Ladehilfsmittel 8 nacheinander von der vorderen Fördervorrichtung 14a ergriffen werden können bzw. die Förderebene 78 der Transportvorrichtung 7 die beiden Ladehilfsmittel 8 übernehmen kann. Die Ladehilfsmittel 8 werden während der Auslagerungsbewegung von der Transportvorrichtung 7; 90, insbesondere der(n) Anschlagvorrichtung(en) 44; 96; 97 mit einer Vorschubkraft beaufschlagt und auf der horizontalen Lagerfläche in Richtung auf die Fördereinheit 4 bewegt. Gleichzeitig wird auch die Fördervorrichtung 14a in Auslagerrichtung 84 angetrieben. Die Fördergeschwindigkeit der Fördervorrichtungen 14a entspricht der Einfahrgeschwindigkeit der Teleskoparme 13a, 13b.

Die Ladehilfsmittel 8 werden sodann über die Fördervorrichtung 14a und gegebenenfalls die Fördervorrichtung 14b auf der Plattform 6 in oben beschriebener Weise positioniert.

Sollen jene zu einem Kommissionierauftrag zugehörigen Ladehilfsmittel 8 aus dem Regalfach 9 bzw. dem Lagerkanal 80 ausgelagert werden, werden die Teleskoparme 13a, 13b vollständig eingefahren und dabei alle Ladehilfsmittel 8 in Richtung auf die Transportvorrichtung 7 abgeschoben und auf der Förderebene 78 übernommen. Gleichzeitig werden auch die Fördervorrichtungen 14a, 14b in Auslagerrichtung 84 angetrieben. Die Fördergeschwindigkeit der Fördervorrichtungen 14a, 14b entspricht der Einfahrgeschwindigkeit der Teleskoparme 13a, 13b.

Vorzugsweise werden während der Verstellbewegung der Transportvorrichtung 7 zur Auslager-Fördertechnik (nicht dargestellt) oder Verladungsstation sowohl die rechten und linken Anschlagvorrichtungen 44, 45 in ihre Betätigungsstellung verstellt, wie in Fig. 1b eingetragen. Dadurch wird während der Fahrbewegung der Fahreinheit 4 ein gesicherter Transport der Ladehilfsmittel 8 möglich und können Störungen im Lagersystem vermieden werden.

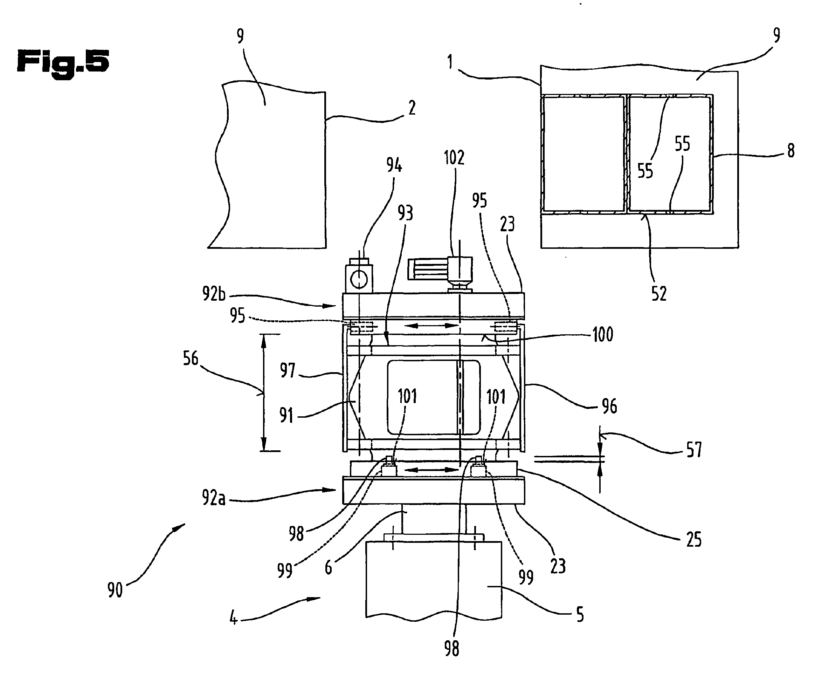

In der Fig. 5 ist eine weitere Ausführung der Transportvorrichtung 90 zum Ein- bzw. Auslagern von Ladehilfsmitteln 8 in ein bzw. aus einem Regalfach 9 der zu beiden Seiten aufgestellten Regalsysteme 1, 2 gezeigt, die eine Tragplatte 91 aufweist, auf der eine parallel angeordnete Teleskoparme 92a, 92b aufweisende Ausfahreinheit und zwischen diesen eine Fördervorrichtung 93, beispielsweise Zweispurförderer, gelagert ist.

Diese Transportvorrichtung 7 kann entweder zwei Ladehilfsmittel 8 mit den Abmessungen 300 mm x 400 mm im Quertransport oder ein Ladehilfsmittel 8 mit den Abmessungen 600 mm x 400 mm im Längstransport aufnehmen.

Die Tragrahmen 23 der Teleskoparme 92a, 92b sind an der Tragplatte 91 ortsfest befestigt. Die Fördervorrichtung 93 ist an einen Antriebsmotor 94 gekoppelt. Die Transportvorrichtung 90 bzw. einer der Teleskoparme 92a, 92b der Ausfahreinheit umfasst zusätzlich über unabhängig voneinander steuerbare Stellmotoren 95 zwischen der oben beschriebenen Ausgangsstellung und Betätigungsstellung bewegbare Anschlagvorrichtungen 96, 97. Zwischen den Anschlagvorrichtungen 96, 97 weist die Transportvorrichtung 90 noppenartige Mitnahmeorgane 98 auf, die jeweils über einen Stellantrieb 99 zwischen einer rückgezogenen Grundstellung und einer vorgeschobenen Förderstellung relativ verstellbar an der Tragplatte 91 gelagert ist. Der Stellantrieb 99 umfasst einen Fluidzylinder, der mit dem Mitnahmeorgan 98 gekoppelt ist. Jedes Mitnahmeorgan 98 ist axial verschiebbar in einer Führung (nicht dargestellt) am Oberschlitten 25 eines der Teleskoparme 92a, 92b gelagert. Die Teleskoparme 13a, 13b sind über einen Antriebsmotor 102 eines Stellantriebes in Bezug auf die Plattform 6 nach beiden Richtungen teleskopartig ausziehbar, wie in Fig. 4 beschrieben.

Der Verstellweg 57 des Mitnahmeorgans 98 ist kleiner als der Verstellweg 56 der Anschlagvorrichtung 96, 97, wobei der Verstellweg 56 so festgelegt ist, dass die Anschlagvorrichtung 96, 97 in der Betätigungsstellung über die Seitenwand 52 hinweg bis vor und/oder hinter das Ladehilfsmittel 8 verstellt ist.

Wie in der Fig. 5 eingetragen, können der ortsfeste Teleskoparm 92b bzw. Oberschlitten 25 und die Mitnahmeorgane 98 auch relativ zueinander verstellbare und in eine Ausricht- bzw. Zentrierstellung verstellbare sowie gegen die in Einlagerrichtung 10 parallelen Seitenwänden 52 anlegbare Ausrichtflächen 100, 101 aufweisen. Mit anderen Worten bilden die Mitnahmeorgane 98 zusätzlich eine Ausrichtvorrichtung für auf der Fördervorrichtung 93 bereitgestellte Ladehilfsmittel 8 aus.

Nach dieser Ausführung wird das Ladehilfsmittel 8 beim Einlagervorgang auf der einen Seite über Reibschluss (Ausrichtflächen 100) und auf der gegenüberliegenden Seite über Formschluss (Mitnahmeorgane 98) ergriffen.

Die in Fig. 5 gezeigte Ausführung der Transportvorrichtung 90 bzw. Ausfahreinheit kann auch mit nur einem zwischen der rückgezogenen Grundstellung und der vorgeschobenen Förderstellung relativ verstellbaren Mitnahmeorgan 98 und/oder zwischen der oben beschriebenen Ausgangsstellung und Betätigungsstellung bewegbaren Anschlagvorrichtung 96 versehen sein. Dies ist beispielsweise der Fall, wenn das Lagersystem auf nur einen Seite zur Gasse 3 ein Regalsystem 1 aufweist.

Die beschriebene Transportvorrichtung 7 und das Verfahren auch bei der in Fig. 5 gezeigten Ausführung sehr effizient einsetzbar, wo die Regalfächer 9 der Regalsysteme 1, 2 jeweils nur mit einer vorderen und hinteren Reihe von Abstellplätzen 11a, 11b ausgebildet sind.

Auch wenn in den vorangegangenen Ausführungsbeispielen die Formschlussverbindung zwischen Mitnahmeorgan 54a, 54b; 98 und Mitnahmeöffnung 55 an den Seitenwänden 52 des Ladehilfsmittels 8 dargestellt ist, ist es genauso gut möglich, dass am Boden des Ladehilfsmittels 8 eine Mitnahmeöffnung vorgesehen ist und das Mitnahmeorgan aus einer unterhalb der Transportebene liegenden Grundstellung in eine an der Förderebene vorragende Förderstellung verstellbar ist und dabei in die Mitnahmeöffnung 55 formschlüssig eingreift.

Des weiteren ist es auch möglich, dass Stückgüter, beispielsweise Packeinheiten, ohne Ladehilfsmittel 8 in oben beschriebener Weise mit der Transportvorrichtung 7; 90 manipuliert werden.

Der Ordnung halber sei abschließend darauf hingewiesen, dass zum besseren Verständnis des Aufbaus der Transportvorrichtung 7 diese bzw. deren Bestandteile teilweise unmaßstäblich und/oder vergrößert und/oder verkleinert dargestellt wurden.

### Bezugszeichenaufstellung

- 1: Regalsystem
- 2: Regalsystem
- 3: Gasse
- 4: Fördereinheit
- 5: Mast
- 6: Plattform
- 7: Transportvorrichtung
- 8: Ladehilfsmittel
- 9: Regalfach
- 10: Einlagerrichtung
- 11a: Abstellplatz
- 11b: Abstellplatz
- 11c: Abstellplatz
- 11d: Abstellplatz
- 12: Tragplatte
- 13a: Teleskoparm
- 13b: Teleskoparm
- 14a: Fördervorrichtung
- 14b: Fördervorrichtung
- 15a: Antriebsmotor
- 15b: Antriebsmotor
- 16: Öffnungsstellung
- 17: Schießstellung
- 18: Stellmotor
- 19: Spindel
- 20a: Lagerelement
- 20b: Lagerelement
- 20c: Lagerelement
- 21: Befestigungswinkel
- 22a: Führungsanordnung
- 22b: Führungsanordnung
- 23: Tragrahmen
- 24c: Mittelschlitten
- 25: Oberschlitten
- 26: Seitenwand

- 27: Seitenwand
- 28: Seitenwand
- 29: Seitenwand
- 30: Führungsanordnung
- 31: Seitenführungsbahn
- 32: Höhenführungsbahn
- 33: Basis
- 34: Schenkel
- 35: Führungsanordnung
- 36: Seitenführungsbahn
- 37: Höhenführungsbahn
- 38: Unterseite
- 39: Oberseite
- 40: Führungssteg
- 41: Führungssteg
- 42: Gleitleiste
- 43: Stellmotor
- 44: Anschlagvorrichtung
- 45: Anschlagvorrichtung
- 46: Ausnehmung
- 47: Bewegungsweg
- 48: Achse
- 49:
- 50: Sensor
- 51: Sensor
- 52: Seitenwand
- 53: Ausrichtfläche
- 54a: Mitnahmeorgan
- 54b: Mitnahmeorgan
- 55: Mitnahmeöffnung
- 56: Verstellweg
- 57: Verstellweg
- 58: Vorzone
- 59: Fördervorrichtung
- 60: Antriebsrad
- 61: Umlenkrad
- 62: Umlenkrad
- 63: Spannrad
- 64: Zugmittel
- 65: Antriebswelle
- 66: Antriebsmotor
- 67: Mitnahmeorgan
- 68: Zugmittel
- 69: Zugmittel
- 70: Klemme
- 71: Klemme
- 72: Rolle
- 73: Klemme
- 74: Klemme
- 75: Rolle
- 76: Führungselement
- 77: Führungselement
- 78: Förderebene
- 79:
- 80: Lagerkanal
- 81: Lagerkanal
- 82: Lagerkanal
- 83: Lagerkanal
- 84: Auslagerrichtung
- 85: Rückwand
- 90: Transportvorrichtung
- 91: Tragplatte
- 92a: Teleskoparm
- 92b: Teleskoparm
- 93: Fördervorrichtung
- 94: Antriebsmotor
- 95: Stellmotor
- 96: Anschlagvorrichtung
- 97: Anschlagvorrichtung
- 98: Mitnahmeorgan
- 99: Stellantrieb
- 100: Ausrichtfläche
- 101: Ausrichtfläche
- 102: Antriebsmotor

## Patentansprüche

1. Verfahren zum Einlagern von Ladehilfsmitteln (8) mit einer Transportvorrichtung (7; 90) in ein Regalfach (9) mit hintereinander angeordneten Abstellplätzen (11 a bis 11d), wobei ein erstes Ladehilfsmittel (8) von der Transportvorrichtung (7; 90) in das Regalfach (9) auf den in Einlagerrichtung (10) vorderen Abstellplatz (11a bis 11d) befördert wird, wonach ein weiteres Ladehilfsmittel (8) von der Transportvorrichtung (7; 90) in das Regalfach (9) auf den vorderen Abstellplatz (11a bis 11d) bewegt und dabei das vorangegangene, auf den vorderen Abstellplatz (11a bis 11d) beförderte Ladehilfsmittel (8) in Einlagerrichtung (10) auf den dahinter liegenden Abstellplatz (11a bis 11d) bewegt und das weitere Ladehilfsmittel (8) auf den vorderen Abstellplatz (11a bis 11d) befördert wird, sodass die Ladehilfsmittel (8) dicht aneinander liegend im Regalfach (9) abgestellt sind, wobei zum Einlagern eines Ladehilfsmittels (8) ein Mitnahmeorgan (54a, 54b; 98) der Transportvorrichtung (7; 90) in Richtung auf das einzulagernde Ladehilfsmittel (8) zugestellt und dabei das Ladehilfsmittel (8) vom Mitnahmeorgan (54a, 54b; 98) an einer Seitenwand (52) oder am Boden formschlüssig ergriffen wird und auf der Einlagerungsbewegung das auf den vorderen Abstellplatz (11a bis 11d) einzulagernde, weitere Ladehilfsmittel (8) bis zum Erreichen seiner endgültigen Abstellposition am vorderen Abstellplatz (11a bis 11d) mittels des Mitnahmeorgans (54a, 54b; 98) mit einer Vorschubkraft beaufschlagt wird.

2. Verfahren nach Anspruch 1, **dadurch gekennzeichnet, dass** ein weiteres Ladehilfsmittel (8) von der Transportvorrichtung (7; 90) in das Regalfach (9) auf den in Einlagerrichtung (10) vorderen Abstellplatz (11a bis 11d) bewegt und dabei die vorangegangenen, auf den vorderen und hinteren Abstellplatz (11a bis 11d) beförderten Ladehilfsmitteln (8) auf die in Einlagerrichtung (10) dahinter liegenden Abstellplätze (11a bis 11d) bewegt und das weitere Ladehilfsmittel (8) auf den vorderen Abstellplatz (11a bis 11d) befördert werden.

3. Verfahren nach Anspruch 1, **dadurch gekennzeichnet, dass** das Ladehilfsmittel (8) vor der bevorstehenden Einlagerung in das Regalfach (9) auf einer Fördereinheit (4) gegen eine Anschlagvorrichtung (44, 45; 96, 97) der Transportvorrichtung (7; 90) sowohl in Einlagerrichtung (10) als auch von einer Ausrichtvorrichtung (53) der Transportvorrichtung (7; 90) parallel zur Einlagerrichtung (10) positioniert wird.

4. Verfahren nach Anspruch 1, **dadurch gekennzeichnet, dass** das Mitnahmeorgan (54a, 54b; 98) einer Mitnahmeöffnung (52) am Ladehilfsmittel (8) annähernd mittig gegenüber liegt, wenn das Ladehilfsmittel (8) gegen die Anschlagvorrichtung (44, 45; 96, 97) bewegt wurde.

5. Verfahren nach Anspruch 1, **dadurch gekennzeichnet, dass** ein in Richtung auf den vorderen Abstellplatz (11a bis 11d) beförderte Ladehilfsmittel (8) gegen das jeweils vorangegangene, auf den vorderen Abstellplatz (11a bis 11d) beförderte Ladehilfsmittel (8) auffahrt, sodann beide Ladehilfsmittel (8) gemeinsam dicht aneinander liegend auf den festgelegten Abstellplatz (11a bis 11d) befördert werden.

6. Verfahren nach Anspruch 1, **dadurch gekennzeichnet, dass** zum Auslagern mehrerer Ladehilfsmittel (8) aus dem Regalfach (9) auf eine Fördereinheit (4) eine Anschlagvorrichtung (44, 45; 96, 97) der Transportvorrichtung (7; 90) in Einlagerrichtung (10) bis hinter eine von der Fördereinheit (4) abgewandte Rückwand (85) des am hintersten Abstellplatz (11b; 11d) abgestellten Ladehilfsmittels (8) verstellt und danach die auf den Abstellplätzen (11a, 11b; 11a bis 11d) hintereinander abgestellten Ladehilfsmittel (8) mittels der Anschlagvorrichtung (44, 45; 96, 97) in einer einzigen Auslagerungsbewegung dicht aneinander liegend gemeinsam in Richtung auf die Fördereinheit (4) bewegt werden.

7. Verfahren nach Anspruch 6, **dadurch** gekenntzeichnet, dass zum Auslagern von Ladehilfsmitteln (8) die hintereinander abgestellten Ladehilfsmittel (8) nur soweit in Richtung auf die Fördereinheit (4) bewegt werden, dass ein oder einige der Ladehilfsmittel (8) vom Regalfach (9) auf die Fördereinheit (4) abgegeben werden.

8. Verfahren nach Anspruch 6, **dadurch gekennzeichnet, dass** die Anschlagvorrichtung (44, 45; 96, 97) der Transportvorrichtung (7; 90) in Einlagerrichtung (10) bis hinter eine von der Fördereinheit (4) abgewandte Rückwand (85) des am hintersten Abstellplatz (11b; 11d) abgestellten Ladehilfsmittels (8) bewegt und danach in Richtung auf das Ladehilfsmittel (8) verstellt wird, sodass beim Auslagern die Anschlagvorrichtung (44, 45; 96, 97) das Ladehilfsmittel (8) an der Rückwand (85) von hinten umgreift.

9. Transportvorrichtung (7; 90) zum Ein- und Auslagern von in Einlager- und Auslagerrichtung (10, 84) dicht gegeneinander anliegenden Ladehilfsmitteln (8) in ein bzw. aus einem Regalfach (9) mit hintereinander angeordneten Abstellplätzen (11a bis 11d), die eine auf einer Plattform (6) gelagerte Ausfahreinheit aufweist, wobei die Ausfahreinheit an ihrem in Einlagerrichtung (10) vorderen Ende eine in den Bewegungsweg (47) der Ladehilfsmittel (8) verstellbare Anschlagvorrichtung (44, 45; 96, 97), mit der zum Auslagern die auf den Abstellplätzen (11a, 11b; 11a bis 11d) abgestellten Ladehilfsmittel (8) in einer einzigen Auslagerbewegung dicht aneinander liegend gemeinsam in Auslagerrichtung (84) bewegbar sind, sowie auf einer dem Ladehilfsmittel (8) zugewandten Seite ein auf das Ladehilfsmittel (8) zustellbares Mitnahmeorgan (54a, 54b; 98), mit dem zum Einlagern die Ladehilfsmittel (8) nacheinander an einer Seitenwand (52) oder am Boden formschlüssig ergriffen und in Einlagerrichtung (10) auf den vorderen Abstellplatz (11a bis 11d) gefördert werden, wobei ein auf dem vorderen Abstellplatz (11a bis 11d) stehendes, erstes Ladehilfsmittel (8) durch eine einzulagerndes, weiters Ladehilfsmittel (8) in Einlagerrichtung (10) auf den dahinter liegenden Abstellplatz (11a bis 11d) bewegt wird, umfasst, wobei der Stellweg (57) des Mitnahmeorgans (54a, 54b; 98) kleiner ist als der Stellweg (56) der Anschlagvorrichtung (44, 45; 96, 97) und der Abstand zwischen der Anschlagvorrichtung (44) und dem Mitnahmeorgan (54a, 54b; 98) zwischen 10% und 75% der Länge eines Ladehilfsmittels (8) beträgt.

10. Transportvorrichtung nach Anspruch 9, **dadurch gekennzeichnet, dass** die Ausfahreinheit parallel ausfahrbare Teleskoparme (13a, 13b; 92a, 92b) aufweist.

11. Transportvorrichtung nach Anspruch 10, **dadurch gekennzeichnet, dass** die Teleskoparme (13a, 13b; 92a, 92b) über einen Stellantrieb quer zu dessen Längserstreckung relativ zueinander verstellbar auf der Plattform (6) der Fördereinheit (4) gelagert sind und wovon zumindest ein Teleskoparm (13a, 13b; 92a, 92b) mit dem Mitnahmeorgan (54a, 54b; 98) versehen ist, welches mit dem Teleskoparm (13a, 13b; 92a, 92b) fest verbunden ist.

12. Transportvorrichtung nach Anspruch 10, **dadurch gekennzeichnet, dass** zumindest ein Teleskoparm (13a, 13b; 92a, 92b) mit der Anschlagvorrichtung (44, 45; 96, 97) versehen ist, die über einen Stellantrieb quer zu dessen Längserstreckung verstellbar am Teleskoparm (13a, 13b; 92a, 92b) gelagert ist

## Claims

1. Method for introducing loading auxiliary means (8) by means of a transport device (7; 90) into a shelf compartment (9) with storage spaces (11a to 11d) arranged one behind the other, wherein a first loading auxiliary means (8) is conveyed by the transport device (7; 90) into the shelf compartment (9) to the storage space (11a to 11d) that is at the front in the direction of insertion (10), after which an additional loading auxiliary means (8) is moved by the transport device (7; 90) into the shelf compartment (9) to the front storage space (11a to 11d) and in this way the preceding loading auxiliary means (8) conveyed to the front storage space (11a to 11d) is moved in the direction of insertion (10) into the storage space (11a to 11d) behind, and the additional loading auxiliary means (8) is conveyed to the front storage space (11a to 11d) so that the loading auxiliary means (8) are deposited in the shelf compartment (9) sitting tightly next to one another, and in order to introduce a loading auxiliary means (8), a drive member (54a, 54b; 98) of the transport device (7; 90) is moved in the direction towards the loading auxiliary means (8) to be introduced and accordingly the loading auxiliary means (8) is gripped in a positive manner by the drive member (54a, 54b; 98) by a side wall (52) or by the base and, during the introducing movement, the drive member (54a, 54; 98) applies a forward driving force to the additional loading auxiliary means (8) to be introduced into the front storage space (11a to 11d) until it reaches its final storage position at the front storage space (11a to 11d).

2. Method according to claim 1, wherein an additional loading auxiliary means (8) is moved by the transport device (7; 90) into the shelf compartment (9) to the storage space (11a to 11d) at the front in the direction of insertion (10) and in this way the preceding loading auxiliary means (8) conveyed to the front and rear storage space (11a to 11d) is moved to the storage spaces (11a to 11d) that are behind in the direction of introduction (10) and the additional loading auxiliary means (8) is conveyed to the front storage space (11a to 11d).

3. Method according to claim 1, wherein before being introduced into the shelf compartment (9), the loading auxiliary means (8) is positioned on a conveying unit (4) against a stop device (44, 45; 96, 97) of the transport device (7; 90) both in the direction of insertion (10) and also parallel to the direction of insertion (10) by an alignment device (53) of the transport device (7; 90).

4. Method according to claim 1, wherein the drive member (54a, 54b; 98) is almost centrally opposite a drive opening (52) on the loading auxiliary means (8), when the loading auxiliary means (8) has been moved up to the stop device (44, 45; 96, 97).

5. Method according to claim 1, wherein a loading auxiliary means (8) conveyed in the direction of the front storage space (11a to 11d) moves against the preceding loading auxiliary means (8) conveyed to the front storage space (11a to 11d), and then both loading auxiliary means (8) are conveyed jointly closely adjacent to one another to the defined storage space (11a to 11d).

6. Method according to claim 1, wherein to remove several loading auxiliary means (8) from the shelf compartment (9) onto a conveying unit (4), the stop device (44, 45; 96, 97) of the transport device (7; 90) is moved in the direction of insertion (10) behind a rear wall (85) of the loading auxiliary means (8) placed in the rearmost storage space (11b; 11d) facing away from the conveying unit (4) and after this the loading auxiliary means (8) placed behind one another in the storage spaces (11a, 11b; 11a to 11d) are moved by the stop device (44, 45; 96, 97) in a single removal movement jointly in the direction of the conveying unit (4).

7. Method according to claim 6, wherein for removing loading auxiliary means (8), the loading auxiliary means (8) placed behind one another are only moved so far in the direction of the conveying unit (4) that one or several of the loading auxiliary means (8) can be passed from the shelf compartment (9) onto the conveying unit (4).

8. Method according to claim 6, wherein the stop device (44, 45; 96, 97) of the transport device (7; 90) is moved in the introduction direction (10) behind a rear wall (85) of the loading auxiliary means (8) in the rearmost storage space (11b; 11d) facing away from the conveying unit (4) and then moved in the direction of the loading auxiliary means (8) so that during removal, the stop device (44, 45; 96, 97) grips the loading auxiliary means (8) from behind by the rear wall (85).

9. Transport device (7; 90) for introducing and removing loading auxiliary means (8) stored closely next to one another in the direction of insertion and removal (10, 84) into or out of a shelf compartment (9) with storage spaces (11a to 11d) arranged behind one another, which comprises a removing unit mounted on a platform (6), and the removing unit at its front end in the direction of insertion (10) has a stop device (44, 45; 96, 97) that is adjustable in the movement path (47) of the loading auxiliary means (8) by means of which the loading auxiliary means (8) placed in the storage spaces (11a, 11b; 11a to 11d) can be moved jointly in a single removing movement sitting closely next to one another in order to remove them, and on a side facing the loading auxiliary means (8) has a drive member (54a, 54b; 98) which can be moved towards the loading auxiliary means (8) by means of which the auxiliary loading means (8) are gripped by a side wall (52) or by the base one after the other and conveyed in the direction of insertion (10) to the front storage space (11a to 11d) in order to introduce them, and a first loading auxiliary means (8) placed on the front storage space (11a to 11d) is moved in the direction of insertion (10) to the storage space lying behind (11a to 11d) by an additional loading auxiliary means (8) being introduced, and the adjustment path (57) of the drive element (54a, 54b; 98) is shorter than the adjustment path (56) of the stop device (44, 45; 96, 97) and the distance between the stop device (44) and the drive element (54a, 54b; 98) is between 10% and 75% of the length of an loading auxiliary means (8).

10. Transport device according to claim 9, wherein the removing unit comprises telescopic arms (13a, 13b; 92a, 92b) which can be extracted in parallel.

11. Transport device according to claim 10, wherein the telescopic arms (13a, 13b; 92a, 92b) are mounted on the platform (6) of the conveying unit (4) so that they can be adjusted relative to one another by means of a control drive at right angles to its longitudinal extension, and of which at least one telescopic arm (13a, 13b; 92a, 92b) is provided with the drive member (54a, 54b; 98), which is connected securely to the telescopic arm (13a, 13b; 92a, 92b).

12. Transport device according to claim 10, wherein at least one telescopic arm (13a, 13b; 92a, 92b) is provided with the stop device (44, 45; 96, 97), which is mounted via a control drive at right angles to its longitudinal extension adjustably on the telescopic arm (13a, 13b; 92a, 92b).

## Revendications

1. Procédé pour entreposer des moyens auxiliaires de chargement (8) avec un dispositif de transport (7; 90) dans un casier (9) avec des emplacements de pose disposés les uns derrière les autres (11a à 11d), où un premier moyen auxiliaire de chargement (8) est convoyé par le dispositif de transport (7; 90) dans le casier (9) sur l'emplacement de pose avant (11a à 11d) dans la direction d'emmagasinage, à la suite de quoi un autre moyen auxiliaire de chargement (8) est déplacé par le dispositif de transport (7; 90) dans le casier (9) sur l'emplacement de pose avant (11a à 11d) et, ce faisant, le moyen auxiliaire de chargement (8) précédent, transporté à l'emplacement de pose avant (11a à 11d), est déplacé dans la direction d'emmagasinage (10) sur l'emplacement de pose (11a à 11d) situé derrière et que l'autre moyen auxiliaire de chargement (8) est transporté à l'emplacement de pose avant (11a à 11d) de sorte que les moyens auxiliaires de chargement (8) sont déposés, étroitement les uns aux autres dans le casier (9), où pour l'emmagasinage d'un moyen auxiliaire de chargement (8), un organe d'entraînement (54a, 54b; 98) du dispositif de transport (7; 90) est rapproché en direction du moyen auxiliaire de chargement (8) à emmagasiner et, ce faisant, le moyen auxiliaire de chargement (8) est saisi par l'organe d'entraînement (54a, 54b; 98) à une paroi latérale (52) ou au fond par concordance des formes et, lors du mouvement d'emmagasinage, le moyen auxiliaire de chargement supplémentaire (8) à emmagasiner sur l'emplacement de pose avant (11a à 11d), jusqu'à l'atteinte de sa position de pose définitive à l'emplacement de pose avant (11a à 11d), est chargé au moyen de l'organe d'entraînement (54a, 54b; 98) avec une force de poussée vers l'avant.

2. Procédé selon la revendication 1, **caractérisé en ce qu'**un autre moyen auxiliaire de chargement (8) est déplacé par le dispositif de transport (7; 90) dans le casier (9) sur l'emplacement de pose (11a à 11d) avant dans la direction d'emmagasinage (10) et, ce faisant, les moyens auxiliaires de chargement précédents (8) transportés à l'emplacement de pose avant et arrière (11a à 11d) sont déplacés sur les emplacements de pose (11a à 11d) situés dans la direction d'emmagasinage (10) derrière et l'autre moyen auxiliaire de chargement (8) sont convoyés à l'emplacement de pose avant (11a à 11d).

3. Procédé selon la revendication 1, **caractérisé en ce que** le moyen auxiliaire de chargement (8), avant l'emmagasinage prévu, est positionné dans le casier (9) sur une unité de convoyage (4) contre un dispositif de butée (44, 45; 96, 97) du dispositif de transport (7; 90) à la fois dans la direction d'emmagasinage (10) et aussi par un dispositif d'ajustement (53) du dispositif de transport (7; 90) parallèlement à l'installation d'emmagasinage (10).

4. Procédé selon la revendication 1, **caractérisé en ce que** l'organe d'entraînement (54a, 54b; 98) est opposé approximativement au milieu à une ouverture d'entraînement (52) au moyen auxiliaire de chargement (8) lorsque le moyen auxiliaire de chargement (8) a été déplacé contre le dispositif de butée (44, 45; 96, 97).

5. Procédé selon la revendication 1, **caractérisé en ce qu'**un moyen auxiliaire de chargement (8) convoyé en direction de l'emplacement de pose avant (11a à 11d) vient contre le moyen auxiliaire de chargement (8) précédent, transporté à l'emplacement de pose avant (11a à 11d) de sorte que les deux moyens auxiliaires de chargement (8), en étant étroitement juxtaposés, sont transportés à l'emplacement de pose défini (11a à 11d).

6. Procédé selon la revendication 1, **caractérisé en ce que** pour la sortie de plusieurs moyens auxiliaires de chargement (8) du casier (9) sur une unité de transport (4), un dispositif de butée (44, 45; 96, 97) du dispositif de transport (7; 90) est déplacé dans la direction d'emmagasinage (10) jusque derrière une paroi arrière (85) éloignée de l'unité du moyen auxiliaire de chargement (8) déposé sur l'emplacement de pose le plus arrière (11b; 11d) et ensuite, les moyens auxiliaires de chargement (8) sur les emplacements de pose (11a, 11b; 11a, 11d) sont déplacés au moyen du dispositif de butée (44, 45; 96, 97) en un seul mouvement de sortie, en étant étroitement juxtaposés, en direction de l'unité de convoyage (4).

7. Procédé selon la revendication 6, **caractérisé en ce que** pour la sortie des moyens auxiliaires de chargement (8), les moyens auxiliaires de chargement (8) disposés les uns derrière les autres sont déplacés seulement suffisamment en direction de l'unité de convoyage (4) pour qu'un ou quelques-uns des moyens auxiliaires de chargement (8) soient remis du casier (9) à l'unité de convoyage (4).

8. Procédé selon la revendication 6, **caractérisé en ce que** le dispositif de butée (44, 45; 96, 97) du dispositif de transport (7; 90) est déplacé dans la direction d'emmagasinage (10) jusque derrière une paroi arrière (85) éloignée de l'unité de convoyage (4) du moyen de chargement auxiliaire (8) déposé à l'emplacement de pose le plus arrière (11b; 11d) et est ajusté ensuite en direction du moyen auxiliaire de chargement (8) de sorte que lors de la sortie, le dispositif de butée (44, 45; 96, 97) entoure le moyen auxiliaire de chargement (8) à la paroi arrière (85) depuis l'arrière.

9. Dispositif de transport (7; 90) pour l'emmagasinage et la sortie de moyens auxiliaires de chargement (8) étroitement juxtaposés dans la direction d'emmagasinage et de sortie (10, 84) dans ou hors d'un casier (9) avec des emplacements de pose disposés les uns derrière les autres (11a à 11d), qui présente une unité de sortie sur une plate-forme (6), où l'unité de sortie comprend à son extrémité avant dans la direction d'emmagasinage (10) un dispositif de butée (44, 45; 96, 97) déplaçable dans le trajet de déplacement (47) des moyens auxiliaires de chargement (8), au moyen duquel, pour la sortie, les moyens auxiliaires de chargement (8) déposés sur les emplacements de pose (11a, 11b; 11a à 11d) sont déplaçables par un seul mouvement de sortie, en étant étroitement juxtaposés, conjointement dans la direction de sortie (84), ainsi qu'un organe d'entraînement (54a, 54b; 98) rapprochable sur un côté orienté vers le moyen auxiliaire de chargement (8) sur le moyen auxiliaire de chargement (8), au moyen duquel pour l'emmagasinage, les moyens auxiliaires de chargement (8) sont saisis par concordance des formes successivement à une paroi latérale (52) ou au fond et sont convoyés dans la direction d'emmagasinage (10) sur l'emplacement de pose avant (11a à 11d), où un premier moyen auxiliaire de chargement (8) se trouvant sur l'emplacement de pose avant (11a à 11d) est déplacé par un autre moyen auxiliaire de chargement à emmagasiner (8) dans la direction d'emmagasinage (10) sur l'emplacement de pose situé derrière (11a à 11d), où le chemin de déplacement (57) de l'organe d'entraînement (54a, 54b; 98) est plus petit que le chemin de déplacement (56) du dispositif de butée (44, 45, 96, 97), et l'écart entre le dispositif de butée (44) et l'organe d'entraînement (54a, 54b; 98) représente entre 10% et 75% de la longueur d'un moyen auxiliaire de chargement (8).

10. Dispositif de transport selon la revendication 9, **caractérisé en ce que** l'unité de sortie présente des bras télescopiques pouvant être sortis parallèlement (13a, 13b; 92a, 92b).

11. Dispositif de transport selon la revendication 10, **caractérisé en ce que** les bras télescopiques (13a, 13b; 92a, 92b) sont logés par une commande de positionnement transversalement à son extension longitudinale, ajustables les uns relativement aux autres, sur la plate-forme (6) de l'unité de convoyage (4), et dont au moins un bras télescopique (13a, 13b; 92a, 92b) est muni de l'organe d'entraînement (54a, 54b; 98) qui est relié solidement au bras télescopique (13a, 13b; 92a, 92b).

12. Dispositif de transport selon la revendication 10, **caractérisé en ce qu'**au moins un bras télescopique (13a, 13b; 92a, 92b) est muni du dispositif de butée (44, 45; 96, 97) qui est logé par une commande de positionnement transversalement à son extension longitudinale d'une manière ajustable au bras télescopique (13a, 13b; 92a, 92b).
